# EUROPEAN PATENT APPLICATION

(11) **EP 4 403 370 A1**
(43) Date of publication of application: **24.07.2024**
(21) Application number: 22870038.1
(22) Date of filing: 15.09.2022
(51) Int. Cl.: B41M 3/14, B42D 25/24, B42D 25/29

(54) **DISPLAY BODY**

(30) Priority: 16.09.2021 JP 2021150900
(71) Applicant: Toppan Holdings Inc., Tokyo 110-0016 (JP)
(72) Inventor: YOSHINARI, Reiko, Tokyo 110-0016 (JP)
(74) Representative: Hoffmann Eitle
(86) International application number: PCT/JP2022/034618
(87) International publication number: WO 2023/042891

(57) **Abstract**

Provided is a technique of producing a display having high anti-counterfeiting effect at relatively low cost without requiring extremely high positional accuracy in production. A display (1) includes a substrate (10) and pixels (PX), the pixels being arranged in X and Y directions, each of the pixels having a dimension of 440 µm or less in each of the directions, each of the pixels including linear shaped first to third regions (R1, R2, R3), the first to third regions respectively extending in the Y direction and being arranged in the X direction, a first colored line (P1) being provided in the first region in at least some of the pixels, a second colored line (PL2) that exhibits a color different from a color of the first colored line being provided in the second region in at least some of the pixels, a third colored line (PL3) that exhibits a color different from colors of the first and second colored lines being provided in at least some of the pixels, wherein each of the pixels differs from one or more other pixels in one or more of dimensions of the first to third colored lines in the Y direction, whereby a gradation display image is displayed.

## Description

### [Technical Field]

The present invention relates to displays.

### [Background Art]

Techniques have been developed to prevent counterfeiting of printed materials such as banknotes, passports and securities. Such anti-counterfeiting techniques include those that combine halftone dots or lines constituting a print pattern with unevenness formed on the substrate or unevenness formed by raised ink to produce changes in the color or shape of the image in response to changes in observation angle to thereby determine whether the printed material has been counterfeited.

An example of such printed material is described in PTL 1. The printed material includes a base layer provided on the substrate to display a first image, a plurality of printing elements provided on the base layer to display a second image, and a plurality of shielding elements respectively provided on the printing elements to cover the printing elements. The printed material displays the first image when viewed from the front, and displays the second image, for example, when viewed in an oblique direction.

PTL 2 describes another example of the printed material, in which halftone dots or lines are combined with unevenness to produce changes in the color or shape of the image in response to changes in observation angle. In the printed material described in PTL 2, a plurality of convex lines are arranged in stripes on the substrate, in which the plurality of convex lines have the same color as that of the substrate and respectively have a convex cross-sectional shape in the direction perpendicular to the length direction. On the array of the convex lines, a plurality of colored lines which have the same length direction as that of the convex lines and are arranged at the same pitch as that of the convex lines, such that each colored line at least partially overlaps one of the convex lines. The respective colored lines include latent elements and camouflage elements that extend in the length direction and are arranged in the width direction. At least part of the latent elements exhibits a chromatic color, and the rest of the latent elements exhibits an achromatic color. The camouflage elements included in the colored lines, at positions where the latent elements included in the colored lines exhibit a chromatic color, exhibit a chromatic color complementary to the chromatic color of the latent elements, and at positions where the latent elements included in the colored lines exhibit an achromatic color, exhibit an achromatic color similar to that of the latent elements.

When the printed material is viewed from the front, a portion in which the color exhibited by the latent elements and the color exhibited by the camouflage elements among the colored lines are complementary colors to each other exhibits the achromatic color described above. Therefore, when the printed material is viewed from the front, the entirety of the printed pattern formed of the array of such colored lines exhibits the achromatic color described above.

When the printed material is viewed in an oblique direction parallel to a plane perpendicular to the length direction of the colored lines, the influence of one of the latent elements and the camouflage elements on the display decreases as the tilt angle of the observation direction increases. For example, under observation conditions in which the influence of one of the camouflage elements on the display is small, each region displays, as a visible image, a color image exhibiting the colors of the latent elements located in the region.

In this printed material, when the colored lines are linear and the convex lines are meandering, the extent of overlap between the colored lines and the convex lines varies depending on the location. Therefore, when viewed in an oblique direction, the degree of the influence of one of the latent elements and the camouflage elements on the display varies depending on the location. Due to the above effects, the printed material can display a gradation display image as the visible image described above.

Examples of the printed materials to which the anti-counterfeiting technique is applied include those having gloss, brightness or hue that changes in response to changes in the illumination direction or the observation direction. In general, production of such printed materials requires special processing. Therefore, the above technique provides the effect of preventing counterfeiting and imitation. Further, the above technique also has the effect of improving the marketability of the printed materials by imparting a unique aesthetic appearance.

An example of such a technique is described in PTL 3. In the technique described in PTL 3, first, a reflective rainbow hologram is prepared by providing an uneven structure corresponding to the interference fringes of light and depositing a metal such as aluminum on the uneven structure. Then, a thermoplastic resin is applied to a part or the entirety of the printed material, and the deposition surface of the rainbow hologram is heated to press the deposition surface onto a resin layer. After the resin layer is cooled, the rainbow hologram is removed from the resin layer. Thus, the rainbow hologram is provided on the surface of the printed material.

PTL 4 describes the following technique. First, printing using colored ink is performed on a substrate to form a base layer that displays arbitrary characters, designs, and the like. Then, printing using transparent ink is performed on the base layer to form a transparent layer having a stripe-shaped uneven structure on its surface. The transparent layer may be formed by, for example, flexographic printing or silk screen printing.

The transparent layer protects the base layer. Further, the stripe-shaped uneven structure provided on the surface of the transparent layer produces subtle changes in glossiness in response to the observation direction, without interfering with viewing the image displayed by the base layer. Such glossiness provides a sense of luxury and interest to the printed materials. Furthermore, even if the printed material is copied, the above uneven structure cannot be reproduced, and thus the technique has the effect of suppressing counterfeiting.

PTL 5 describes the following technique. First, colored ink is printed on a substrate by offset printing. Next, a transparent resin is applied to a surface of the substrate printed with the colored ink, and the transparent resin layer is semi-dried. Subsequently, an uneven structure is transferred onto a surface of the transparent resin layer by pressure processing using a roll having a stripe-shaped uneven structure on the outer peripheral surface. Thus, a printed material is obtained having gloss, brightness or hue that changes in response to changes in the illumination direction or the observation direction.

### [Citation List]

### [Patent Literature]

PTL 1: JP 2010-247460 A
PTL 2: JP 2018-199323 A
PTL 3: JP H7-186258 A
PTL 4: JP 2006-110782 A
PTL 5: JP 2009-226917 A

### [Summary of Invention]

### [Technical Problem]

As described above, in the printed material described in PTL 1, it is necessary to provide the shielding elements on all the printing elements so that the printing elements are covered when viewed from the front. If the positions of the shielding elements relative to the printing elements are displaced from the target positions, the first image becomes visible when viewed from the front. Therefore, production of the above printed material requires forming the shielding elements with extremely high positional accuracy.

In the printed material described in PTL 2, if the relative positions between the convex lines and the colored lines or the relative positions between the latent elements and the camouflage elements are displaced from their target positions, there is a possibility that an image with a different gradation expression or the like from the intended gradation display image may be displayed when viewed in an oblique direction. Therefore, production of the above printed material also requires forming the latent elements and the camouflage elements with extremely high positional accuracy.

As described in PTL 3, the technique for forming a reflective rainbow hologram has problems of complicated steps and relatively high production cost.

As described in PTLs 4 and 5, the printed material in which a transparent layer having a stripe-shaped uneven structure on its surface is provided on a print layer formed of colored ink does not require extremely high positional accuracy in production, and can be produced at relatively low cost. However, since the stripe-shaped uneven structure can be easily provided on the transparent layer by transfer, the anti-counterfeiting effect achieved by this structure is not necessarily high.

Therefore, the present invention has been made to provide a technique of producing a display having high anti-counterfeiting effect at relatively low cost without requiring extremely high positional accuracy in production.

### [Solution to Problem]

According to an aspect of the present invention, there is provided a display including: a substrate; and a plurality of pixels arranged on the substrate, the plurality of pixels being arranged in first and second directions perpendicular to each other, each of the plurality of pixels having a dimension of 440 µm or less in each of the first and second directions, each of the plurality of pixels including linear shaped first to third regions, the first to third regions respectively extending in the second direction and being arranged in the first direction, the first region including a first colored line in at least some of the plurality of pixels, the first colored line extending in the second direction over an entire width of the first region, the second region including a second colored line that exhibits a color different from a color of the first colored line PL1 in at least some of the plurality of pixels, the second colored line extending in the second direction over an entire width of the second region, the third region including a third colored line that exhibits a color different from colors of the first and second colored lines in at least some of the plurality of pixels, the third colored line extending in the second direction over an entire width of the third region, wherein each of the plurality of pixels differs from one or more other of the plurality of pixels in one or more of dimensions of the first to third colored lines in the second direction, whereby a gradation display image is displayed.

According to another aspect of the present invention, there is provided a display according to the above aspect, wherein an absolute value of a difference between an arithmetic mean W_{AV}1 of a width W1 of the first region, a width W2 of the second region and a width W3 of the third region and the width W1, an absolute value of a difference between the arithmetic mean W_{AV}1 and the width W2, and an absolute value of a difference between the arithmetic mean W_{AV}1 and the width W3 are such that ratios of each of the absolute values to the arithmetic mean W_{AV}1 are each in the range of 0% to 20%.

According to still another aspect of the present invention, there is provided a display according to any of the above aspects, wherein each of the plurality of pixels further includes a linear shaped fourth region, the fourth region extending in the second direction and being arranged parallel to the first to third regions in the first direction, the fourth region including a fourth colored line that exhibits a color different from colors of the first to third colored lines in at least some of the plurality of pixels, the fourth colored line extending in the second direction over an entire width of the fourth region.

According to still another aspect of the present invention, there is provided a display according to the above aspect, wherein an absolute value of a difference between an arithmetic mean Wav2 of a width W1 of the first region, a width W2 of the second region, a width W3 of the third region and a width W4 of the fourth region and the width W1, an absolute value of a difference between the arithmetic mean Wav2 and the width W2, an absolute value of a difference between the arithmetic mean Wav2 and the width W3, and an absolute value of a difference between the arithmetic mean Wav2 and the width W4 are such that ratios of each of the absolute values to the arithmetic mean W_{AV}2 are each in the range of 0% to 20%.

According to still another aspect of the present invention, there is provided a display including: a substrate; and a plurality of pixels arranged on the substrate, the plurality of pixels being arranged in first and second directions perpendicular to each other, each of the plurality of pixels having a dimension of 440 µm or less in each of the first and second directions, each of the plurality of pixels including linear shaped first to third regions, the first to third regions respectively extending in the second direction and being arranged in the first direction, the first region including a first colored line in at least some of the plurality of pixels, the first colored line extending in the second direction over an entire width of the first region, the second region including a second colored line that exhibits a color different from a color of the first colored line in at least some of the plurality of pixels, the second colored line extending in the second direction over an entire width of the second region, the third region including a third colored line that exhibits a color different from colors of the first and second colored lines in at least some of the plurality of pixels, the third colored line extending in the second direction over an entire width of the third region, the first region including a first portion in which the first colored line is not provided or the second region including a second portion in which the second colored line is not provided or the third region including a third portion in which the third colored line is not provided in at least some of the plurality of pixels, one or more of the first to third portions including a fifth colored line that exhibits a color different from colors of the first to third colored lines, the fifth colored line extending in the second direction, wherein each of the plurality of pixels differs from one or more other of the plurality of pixels in one or more of the dimensions of the first to third colored lines in the second direction, and differs from one or more other of the plurality of pixels in a total area of the fifth colored lines, whereby a gradation display image is displayed.

According to still another aspect of the present invention, there is provided a display according to the above aspect, wherein the fifth colored line is provided over an entire length of each of the first to third portions.

Alternatively, according to still another aspect of the present invention, there is provided a display according to the above aspect, wherein in at least some of the plurality of pixels, the fifth colored line is provided only in part of the first to third portions.

Alternatively, according to still another aspect of the present invention, there is provided a display according to the above aspect, wherein in at least some of the plurality of pixels, the fifth colored line is provided only in part of the first to third portions, and a sixth colored line that exhibits a color different from colors of the first to third colored lines and the fifth colored line is provided in a portion of the first to third portions in which the fifth colored line is not provided, the sixth colored line extending in the second direction.

According to still another aspect of the present invention, there is provided a display according to the above aspect, wherein in each of the pixels including the sixth colored line, a sum of the dimension of the first colored line in the second direction and the dimension of the fifth colored line provided in the first portion in the second direction, a sum of the dimension of the second colored line in the second direction and the dimension of the fifth colored line provided in the second portion in the second direction, and a sum of the dimension of the third colored line in the second direction and the dimension of the fifth colored line provided in the third portion in the second direction are the same.

According to still another aspect of the present invention, there is provided a display according to any of the above aspects, wherein an absolute value of a difference between an arithmetic mean W_{AV}1 of a width W1 of the first region, a width W2 of the second region and a width W3 of the third region and the width W1, an absolute value of a difference between the arithmetic mean W_{AV}1 and the width W2, and an absolute value of a difference between the arithmetic mean W_{AV}1 and the width W3 are such that ratios of each of the absolute values to the arithmetic mean W_{AV}1 are each in the range of 0% to 20%, and a difference between the arithmetic mean W_{AV}1 and a width W5A of the fifth colored line located in the first region of the fifth colored line, a difference between the arithmetic mean W_{AV}1 and a width W5B of the fifth colored line located in the second region of the fifth colored line, and a difference between the arithmetic mean W_{AV}1 and a width W5C of the fifth colored line located in the third region of the fifth colored line are such that ratios of each of the differences to the arithmetic mean W_{AV}1 are each in the range of-20% to 34%.

According to still another aspect of the present invention, there is provided a display according to any of the above aspects, wherein the first to third regions are arranged in the same order in the plurality of pixels adjacent in the first direction, and the first to third regions are arranged in the same order in the plurality of pixels adjacent in the second direction.

Alternatively, according to still another aspect of the present invention, there is provided a display according to any of the above aspects, wherein the first to third regions are arranged in the same order in the plurality of pixels adjacent in the first direction, and the first to third regions are arranged in different orders from each other in the plurality of pixels adjacent in the second direction.

According to still another aspect of the present invention, there is provided a display according to any of the above aspects, wherein each of the colored lines has a width in the range of 2.0 µm to 100.0 µm.

According to still another aspect of the present invention, there is provided a display according to any of the above aspects, wherein among contours of the colored lines in a cross section perpendicular to the second direction, a portion corresponding to a top of each of the colored lines has a convex curved shape.

According to still another aspect of the present invention, there is provided a display according to any of the above aspects, wherein each of the colored lines has a height in the range of 0.2 µm to 12.0 µm.

According to still another aspect of the present invention, there is provided a display according to any of the above aspects, wherein each of the colored lines has a root mean square roughness Rq of 0.420 µm or less.

According to still another aspect of the present invention, there is provided a display according to any of the above aspects, wherein the colored lines are printed lines.

According to still another aspect of the present invention, there is provided a display according to any of the above aspects, wherein the colored lines are formed by gravure offset printing.

According to still another aspect of the present invention, there is provided a display according to any of the above aspects, wherein the colored lines include a vapor deposition layer provided on at least part of a relief type diffraction grating.

According to still another aspect of the present invention, there is provided a display according to the above aspect, wherein the plurality of pixels include a relief structure forming layer on which the relief type diffraction grating is formed, the relief structure forming layer being provided on one surface, and the vapor deposition layer that partially covers the relief type diffraction grating.

### [Brief Description of Drawings]

Fig. 1 is a plan view of a display according to a first embodiment of the present invention.
Fig. 2 is an enlarged plan view of a part of the display shown in Fig. 1.
Fig. 3 is a cross-sectional view taken along the line III-III of the display shown in Fig. 2.
Fig. 4 is a cross-sectional view taken along the line IV-IV of the display shown in Fig. 2.
Fig. 5 is a further enlarged plan view of a part of the display shown in Fig. 1.
Fig. 6 is an enlarged plan view of a part of a display according to a first modification.
Fig. 7 is a cross-sectional view taken along the line VII-VII of the display shown in Fig. 6.
Fig. 8 is an enlarged plan view of a part of a display according to a second modification.
Fig. 9 is an enlarged plan view of a part of a display according to a third modification.
Fig. 10 is a cross-sectional view taken along the line X-X of the display shown in Fig. 9.
Fig. 11 is a cross-sectional view taken along the line XI-XI of the display shown in Fig. 9.
Fig. 12 is a cross-sectional view taken along the line XII-XII of the display shown in Fig. 9.
Fig. 13 is a further enlarged plan view of a part of the display shown in Fig. 9.
Fig. 14 is an enlarged plan view of a part of a display according to a fourth modification.
Fig. 15 is a cross-sectional view taken along the line XV-XV of the display shown in Fig. 14.
Fig. 16 is a cross-sectional view taken along the line XVI-XVI of the display shown in Fig. 14.
Fig. 17 is a cross-sectional view taken along the line XVII-XVII of the display shown in Fig. 14.
Fig. 18 is a further enlarged plan view of a part of the display shown in Fig. 14.
Fig. 19 is an enlarged plan view of a part of a display according to a fifth modification.
Fig. 20 is an enlarged plan view of a part of a display according to a sixth modification.
FIG. 21 is an enlarged cross-sectional view of a part of a display according to a second embodiment of the present invention.
Fig. 22 is an enlarged cross-sectional view of a part of a transfer foil that can be used for producing the display shown in Fig. 21.
Fig. 23 is an enlarged plan view of a part of a display according to Comparative Example 4.
Fig. 24 is an enlarged plan view of a part of a display according to Comparative Example 5.
Fig. 25 is an enlarged plan view of a part of a display according to Comparative Example 6.
Fig. 26 is an enlarged plan view of a part of a display according to Comparative Example 7.

### [Description of Embodiments]

With reference to the drawings, some embodiments of the present invention will be described. The embodiments described below are more specific examples of any of the aspects described above. The matters described below can be incorporated alone or in combination into each of the above aspects. The embodiments described below are merely example configurations for embodying the technical idea of the present invention, and the technical idea of the present invention should not limit the materials, shapes, structures, and the like of the components to those described below. The technical idea of the present invention can be modified in various manners within the technical scope defined by the claims.

It should be noted that components having the same or similar functions are denoted by the same reference signs in the drawings referred to below, and redundant description is omitted. In addition, the drawings are schematic, and the relationship between dimensions in one direction and another direction, dimensions of a member and another member, and the like may be different from actual ones.

### <1> First Embodiment

### <1.1> Configuration of Display

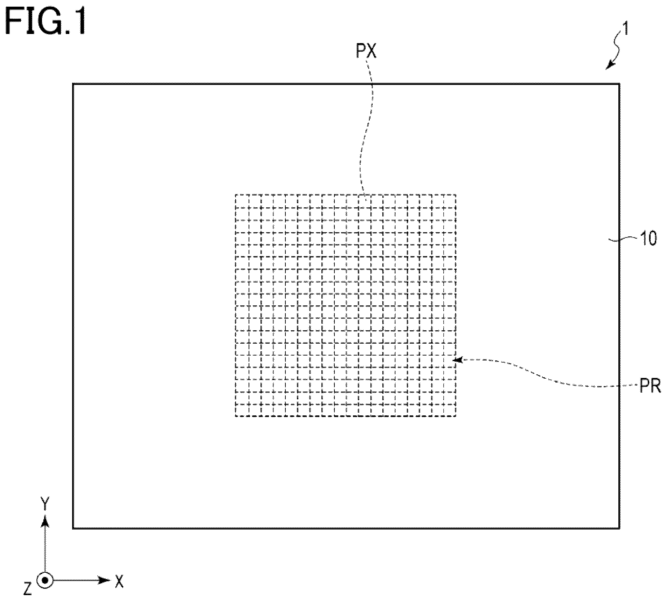

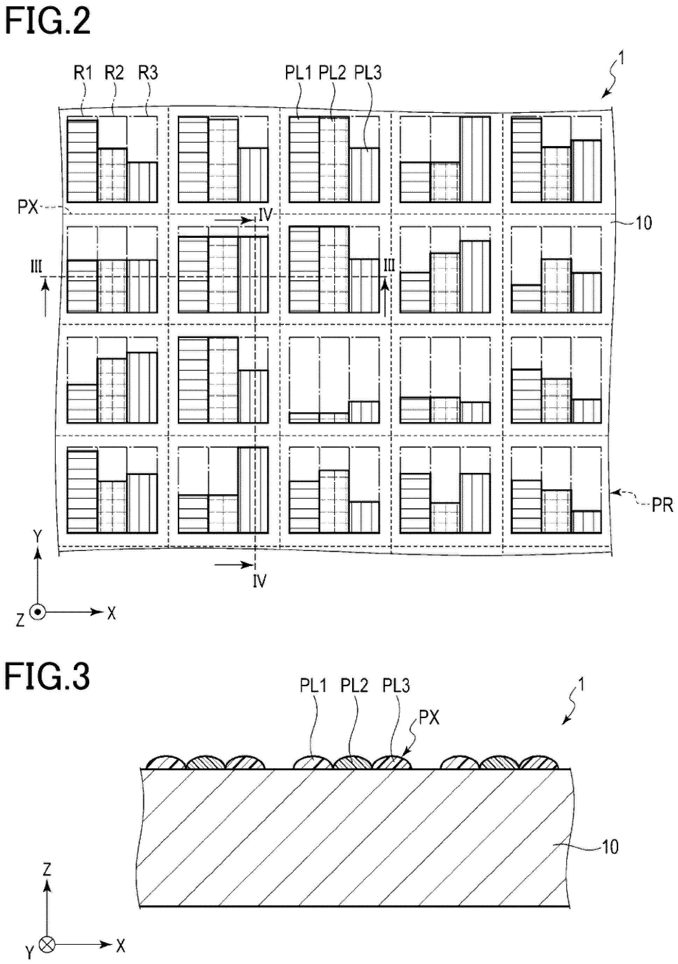

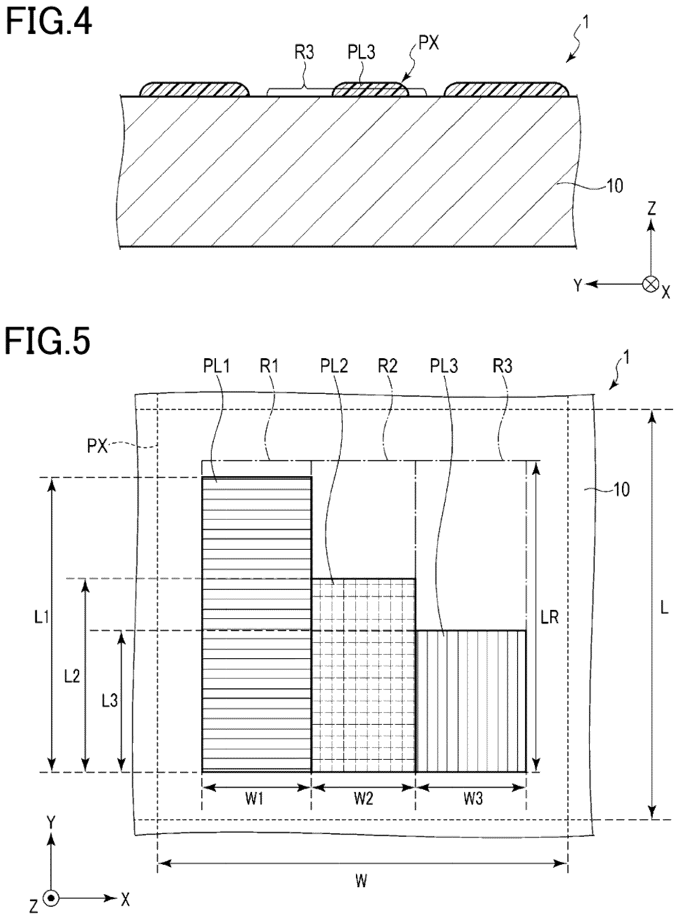

Fig. 1 is a plan view of a display according to a first embodiment of the present invention. Fig. 2 is an enlarged plan view of a part of the display shown in Fig. 1. Fig. 3 is a cross-sectional view taken along the line III-III of the display shown in Fig. 2. Fig. 4 is a cross-sectional view taken along the line IV-IV of the display shown in Fig. 2. Fig. 5 is a further enlarged plan view of a part of the display shown in Fig. 1.

A display 1 shown in Figs. 1 to 5 is a printed matter. The display 1 includes a substrate 10 and a plurality of pixels PX arranged on the substrate 10.

The substrate 10 may be any material that can be printed. Here, the substrate 10 may be a film or a plate. The substrate 10 may have other shapes as long as it has a printable region on a surface.

The substrate 10 includes a print region PR on a surface as shown in Figs. 1 and 2. Although the print region PR in this embodiment has a rectangular shape, the print region PR may have other shapes. Further, although the print region PR in this embodiment is provided only in part of one surface of the substrate 10, the print region PR may be provided on the entirety of one surface of the substrate 10. Further, although the substrate 10 in this embodiment includes one print region PR, the substrate 10 may include a plurality of print regions PR. Moreover, although the print region PR in this embodiment is provided only on one surface of the substrate 10, the print region PR may be provided on both surfaces of the substrate 10.

The pixels PX are arranged in the X direction and the Y direction on the print region PR. The X and Y directions are first and second directions, respectively, intersecting with each other. The X and Y directions are parallel to the print surface of the substrate 10, and in this embodiment, perpendicular to each other. The X and Y directions may be directions diagonally intersecting with each other. Further, the Z direction is a direction perpendicular to the X and Y directions, and in this embodiment, a thickness direction of the substrate 10.

The pixels PX have the same shape and dimensions. In this embodiment, the pixels PX have substantially the same square shape. The pixels PX may have other shapes. For example, the pixels PX may have a rectangular shape. Alternatively, the pixels PX may include three or four rectangular pixels arranged in the short side direction, with the adjacent rectangles staggered in the long side direction.

Each pixel PX has the dimension or period of 440 µm or less in the X and Y directions. That is, each of the dimensions W and L of the pixel PX shown in Fig. 5 is 440 µm or less. If these dimensions are larger than this, the resolution is reduced, and when the display 1 is observed with the naked eye, one or more pixels PX can be distinguished from other adjacent pixels PX.

The dimensions of the pixel PX in each of the X and Y directions are preferably 440.0 µm or less. Further, the dimensions of the pixel PX in each of the X and Y directions are preferably 6.0 µm or more.

Each pixel PX includes a first region R1, a second region R2 and a third region R3. The first region R1, the second region R2 and the third region R3 are linear regions respectively extending in the Y direction and arranged in the X direction.

As shown in Fig. 5, the first region R1 has a dimension W1 in the X direction and a dimension LR in the Y direction. The second region R2 has a dimension W2 in the X direction and a dimension LR in the Y direction. The third region R3 has a dimension W3 in the X direction and a dimension LR in the Y direction. The dimensions W1, W2 and W3 may be the same or different from each other. Hereinafter, the dimensions W1, W2 and W3 may also be referred to as widths W1, W2 and W3.

As shown in Fig. 2, in at least some of the pixels PX, a first colored line PL1 is provided in the first region R1, and the first colored line PL1 extends in the Y direction over the entire width of the first region R1. Further, in at least some of the pixels PX, a second colored line PL2 that exhibits a color different from the color of the first colored line PL1 is provided in the second region R2, and the second colored line PL2 extends in the Y direction over the entire width of the second region R2. Further, in at least some of the pixels PX, a third colored line PL3 that exhibits a color different from the colors of the first colored line PL1 and the second colored line PL2 is provided in the third region R3, and the third colored line PL3 extends in the Y direction over the entire width of the third region R3.

In other words, the arrangement of the pixels PX includes an arrangement of the first colored lines PL1, an arrangement of the second colored lines PL2 and an arrangement of the third colored lines PL3. The first colored lines PL1, the second colored lines PL2 and the third colored lines PL3 each have a linear shape extending in the Y direction, and exhibit colors different from each other. Each of the first colored lines PL1 is located in the first regions R1 in any of the pixels PX. Further, each of the second colored lines PL2 is located in the second region R2 in any of the pixels PX. Further, each of the third colored lines PL3 is located in the third region R3 in any of the pixels PX.

In this embodiment, all the colored lines are printed lines. That is, all the colored lines are formed by printing ink.

In Fig. 2, all the pixels PX include the first colored line PL1, the second colored line PL2 and the third colored line PL3. One or more pixels PX may not necessarily include one or more of the first colored line PL1, the second colored line PL2 and the third colored line PL3.

In each of the first regions R1 in which the first colored line PL1 is provided, the dimension in the X direction, that is, a width W1P of the first colored line PL1 is constant in the Y direction. The first colored lines PL1 in different pixels PX have the same width W1P. The width W1P of the first colored line PL1 is equal to the dimension W1.

In each of the second regions R2 in which the second colored line PL2 is provided, the dimension in the X direction, that is, a width W2P of the second colored line PL2 is constant in the Y direction. The second colored lines PL2 in different pixels PX have the same width W2P. The width W2P of the second colored line PL2 is equal to the dimension W2.

In each of the third regions R3 in which the third colored line PL3 is provided, the dimension in the X direction, that is, a width W3P of the third colored line PL3 is constant in the Y direction. The third colored lines PL3 in different pixels PX have the same width W3P. The width W3P of the third colored line PL3 is equal to the dimension W3.

Each of the width W 1P of the first colored line PL1, the width W2P of the second colored line PL2 and the width W3P of the third colored line PL3 is preferably in the range of 2 µm to 100 µm, and more preferably in the range of 2 µm to 50 µm. Colored lines with a small width and a large height are difficult to form with high shape accuracy. Increasing the widths of the colored lines decreases the distance between colored lines adjacent to each other in the X direction.

It is preferred that the widths W1P, W2P and W3P are substantially the same. That is, it is preferred that the widths W1, W2 and W3 are substantially equal to each other. An absolute value of a difference between an arithmetic mean W_{AV}1 of the widths W1, W2 and W3 and the width W1, an absolute value of a difference between the arithmetic mean W_{AV}1 and the width W2, and an absolute value of a difference between the arithmetic mean W_{AV}1 and the width W2P are such that the ratios of each of the absolute values to the arithmetic mean W_{AV}1 are each preferably in the range of 0% to 20%. When these ratios are small and the observation direction is changed from the Z direction to an oblique direction perpendicular to the Y direction, the observer can observe a change in glossiness.

In this embodiment, as shown in Fig. 3, among the contours of each of the first colored line PL1, the second colored line PL2 and the third colored line PL3 in the cross section perpendicular to the Y direction, a portion corresponding to the top of each colored line has a convex curved shape. This shape is advantageous in that the observer can observe strong glossiness on a portion of the display 1 corresponding to the print region PR.

In each of the first regions R1 in which the first colored line PL1 is provided, a height H1 of the first colored line PL1 is constant in the Y direction. The first colored lines PL1 in different pixels PX have the same height H1.

In each of the second regions R2 in which the second colored line PL2 is provided, a height H2 of the second colored line PL2 is constant in the Y direction. The second colored lines PL2 in different pixels PX have the same height H2.

In each of the third regions R3 in which the third colored line PL3 is provided, a height H3 of the third colored line PL3 is constant in the Y direction. The third colored lines PL3 in different pixels PX have the same height H3.

Each of the height H1 of the first colored line PL1, the height H2 of the second colored line PL2 and the height H3 of the third colored line PL3 is preferably in the range of 0.2 µm to 12 µm, and more preferably in the range of 0.5 µm to 12 µm. If the heights of the colored lines are smaller than these values, the surfaces of the colored lines are likely to have fine irregularities due to particles contained in the colored line. As the height of the colored lines increases, the presence of the colored lines becomes more easily observed.

Even if an attempt is made to form colored lines so that their height and width are constant, one or both of the height and width may have inevitable variations. Even in such a case, the colored lines exhibiting the same color preferably have a similar shape in a cross-section perpendicular to the length direction.

A root mean square roughness Rq of the colored lines is preferably 0.420 µm or less, and more preferably 0.20 µm or less. Smaller surface roughness is advantageous in that the observer can observe strong glossiness. The root mean square roughness Rq of the colored lines is 0 or more, and may be 0.01 µm or more in one example.

The root mean square roughness Rq of the colored lines is obtained by the following method. First, information on the three-dimensional properties of the print surface of the display 1 is obtained using a laser microscope. Then, the height of the print region PR is set to 0, and a position of the greatest height among the colored lines is identified and the height of the colored line at that position is set to 100. In the three-dimensional structure reproduced from the information on the three-dimensional properties, portions with the height in the range of 20 to 100 are identified. From the shapes of these portions in the cross-section perpendicular to the Y direction, an average cross-sectional shape is obtained, and the average cross-sectional shape is fitted to each of the portions identified as above to obtain the difference between them. Then, the above surface texture is converted into the surface texture of a plane. Based on the surface texture of the plane, a root mean square roughness Rq is obtained according to JIS B0601:2013 "Geometrical Product Specifications (GPS)-Surface texture: Profile method-Terms, definitions and surface texture parameters." The root mean square roughness Rq is the arithmetic mean of values obtained at 10 measurement positions.

Each pixel PX differs from one or more other pixels PX in one or more of the dimension L1 of the first colored line PL1 in the Y direction, the dimension L2 of the second colored line PL2 in the Y direction, and the dimension L3 of the third colored line PL3 in the Y direction. That is, each pixel PX differs from one or more other pixels PX in the area of one or more of the first colored line PL1, the second colored line PL2 and the third colored line PL3.

Therefore, each pixel PX differs from one or more other pixels PX in the color produced by mixing the colors of the first region R1, the second region R2 and the third region R3. With this configuration, the display 1 displays a gradation display image at the position of the print region PR.

Further, the outlines of the pixels PX indicated by the dotted line in Figs. 1 and 2 are virtual lines specified from the arrangement of the first colored lines PL1, the second colored lines PL2 and the third colored lines PL3. Although this embodiment is described as having the outlines of the pixels PX, the actual display 1 may or may not have a structure corresponding to the outlines of the pixels PX.

In addition, the outlines of the first region R1, the second region R2 and the third region R3 indicated by the dash-dotted line in Figs. 2 and 5 are virtual lines specified from the arrangement of the first to third colored lines. Although this embodiment is described as having the outlines of the first region R1, the second region R2 and the third region R3, the actual display 1 may or may not have a structure corresponding to the outlines of the first region R1, the second region R2 and the third region R3.

The outlines of the pixels PX, and the outlines of the first regions R1, the second regions R2 and the third regions R3 may be specified by the following method, for example. First, the period of the pixels PX in the X and Y directions is determined from one or more of the arrangement of the first colored lines PL1, the arrangement of the second colored lines PL2 and the arrangement of the third colored lines PL3. Then, the shape, dimensions and position of the first colored line PL1 having the greatest dimension in the Y direction are determined as the shape, dimensions and position of the first region R1 in which the first colored line PL1 is provided. The shape, dimensions and position of all the first regions R1 are specified from the shape, dimensions and position of the first regions R1 specified as above and the period of the pixels PX in the X and Y directions determined as above. Further, the shape, dimensions and position of all the second regions R2 and all the third regions R3 are specified in the same manner as above. Then, a plurality of unit regions each consisting of one first region R1, one second region R2 and one third region R3 are specified, and positions equidistant from adjacent unit regions are determined as the positions of the outlines of the pixels PX. Thus, the outlines of the pixels PX, and the outlines of the first regions R1, the second regions R2 and the third regions R3 can be specified.

### <1.2> First Modification

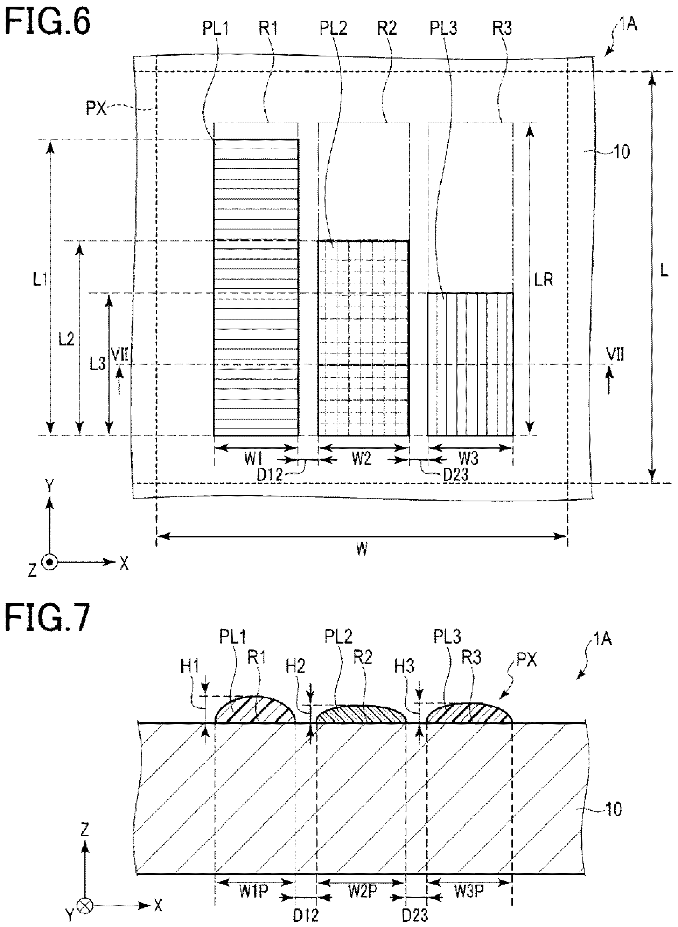

Fig. 6 is an enlarged plan view of a part of a display according to a first modification. Fig. 7 is a cross-sectional view taken along the line VII-VII of the display shown in Fig. 6.

A display 1A shown in Figs. 6 and 7 is the same as the display 1 described above with reference to Figs. 1 to 5, except that the colored lines adjacent to each other in the X direction are spaced from each other. When the adjacent colored lines are in contact with each other, it is difficult to form these colored lines with high shape accuracy. Therefore, it is preferable that the colored lines adjacent to each other in the X direction do not overlap each other, and it is more preferable that they are spaced from each other.

A distance between colored lines adjacent to each other in the X direction, for example, a distance D12 between the first colored line PL1 and the second colored line PL2 adjacent in the X direction, a distance D23 between the second colored line PL2 and the third colored line PL3 adjacent in the X direction, and a distance between the third colored line PL3 included in a pixel PX and the first colored line PL1 included in another pixel PX adjacent in the X direction is preferably greater than 0, and more preferably 2 µm or greater.

The distance between colored lines adjacent to each other in the X direction is preferably 10 µm or less, and more preferably 5 µm or less. Increasing this distance reduces the image density.

When the dimension LR is equal to the dimension L, the colored lines adjacent in the Y direction may be connected to each other even though they are intended to be spaced from each other. Therefore, the dimension L is preferably smaller than the dimension LR. A difference between the dimension LR and the dimension L is preferably 1 µm or greater, and more preferably 3 µm or greater.

### <1.3> Second Modification

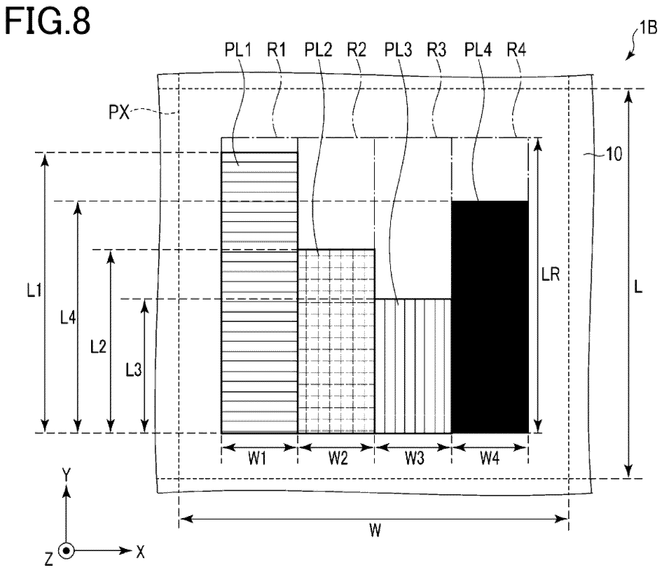

Fig. 8 is an enlarged plan view of a part of a display according to a second modification.

A display 1B shown in Fig. 8 is the same as the display 1 described above with reference to Figs. 1 to 5, except that the following configuration is employed.

That is, in the display 1B, each pixel PX further includes a fourth region R4. The fourth region R4 extends in the Y direction. In each pixel PX, the fourth region R4 is arranged parallel to the first region R1, the second region R2 and the third region R3 in the X direction. The dimensions, shapes and positions described above for the first region R1, the second region R2 and the third region R3 can also be applied to the fourth region R4.

The arrangement of the pixels PX further includes an arrangement of the fourth colored lines PL4. The fourth colored lines PL4 extend in the Y direction, and exhibit a color different from the colors of the first colored lines PL1, the second colored lines PL2 and the third colored lines PL3. In at least some of the pixels PX, a fourth colored line PL4 is provided in the fourth region R4. The fourth colored line PL4 is a printed line. The dimensions, shapes and positions described above for the first colored line PL1, the second colored line PL2 and the third colored line PL3 can also be applied to the fourth colored line PL4.

For example, an absolute value of a difference between an arithmetic mean W_{AV}2 of the width W1 of the first region R1, the width W2 of the second region R2, the width W3 of the third region R3 and the width W4 of the fourth region R4 and the width W1, an absolute value of a difference between the arithmetic mean Wav2 and the width W2, an absolute value of a difference between the arithmetic mean Wav2 and the width W3, and an absolute value of a difference between the arithmetic mean Wav2 and the width W4 are such that the ratios of each of the absolute values to the arithmetic mean W_{AV}2 are each preferably in the range of 0% to 20%.

Also in the display 1B, the colored lines adjacent in the X and Y directions are preferably spaced from each other as described above with reference to the display 1A. In this case, the distance between the adjacent colored lines is preferably in the ranges described above with reference to the display 1A.

### <1.4> Third Modification

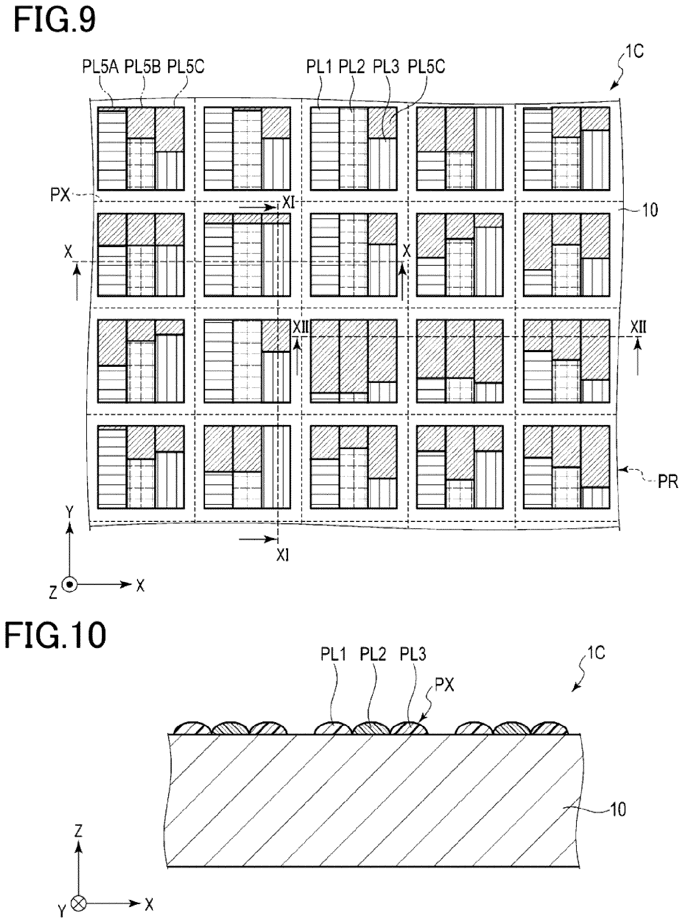

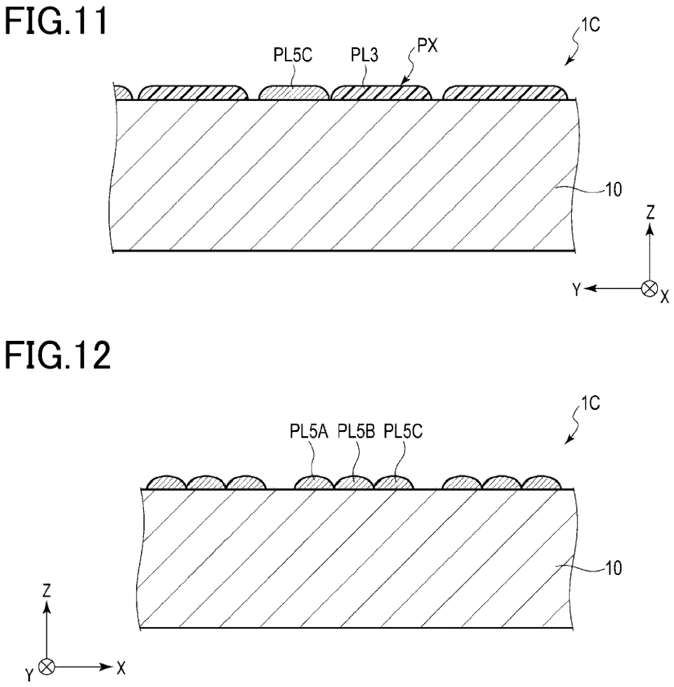

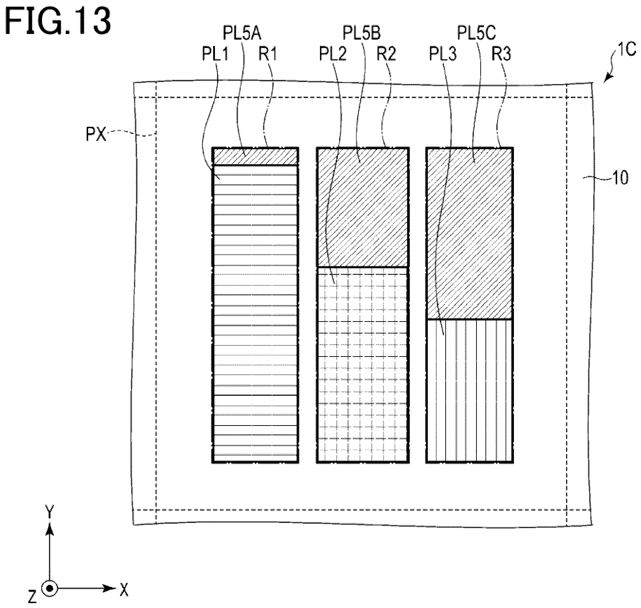

Fig. 9 is an enlarged plan view of a part of a display according to a third modification. Fig. 10 is a cross-sectional view taken along the line X-X of the display shown in Fig. 9. Fig. 11 is a cross-sectional view taken along the line XI-XI of the display shown in Fig. 9. Fig. 12 is a cross-sectional view taken along the line XII-XII of the display shown in Fig. 9. Fig. 13 is a further enlarged plan view of a part of the display shown in Fig. 9.

A display 1C shown in Figs. 9 to 13 is the same as the display 1A described above with reference to Figs. 6 and 7, except that the following configuration is employed.

That is, in the display 1C, in at least some of the pixels PX, the first region R1 includes a first portion in which the first colored line PL1 is not provided, or the second region R2 includes a second portion in which the second colored line PL2 is not provided, or the third region R3 includes a third portion in which the third colored line PL3 is not provided. In each of such pixels PX, a fifth colored line that exhibits a color different from the colors of the first colored line PL1, the second colored line PL2 and the third colored line PL3 is provided in one or more of the first to third portions, and the fifth colored line extends in the Y direction, which is the second direction, over the entire width of each portion. The fifth colored line is a printed line.

In Figs. 9 to 13, a fifth colored line provided in the first portion is a fifth colored line PL5A, a fifth colored line provided in the second portion is a fifth colored line PL5B, and a fifth colored line provided in the third portion is a fifth colored line PL5C. In the pixels PX in which the first colored line PL1 and the fifth colored line PL5A are provided in the first region R1, the first colored line PL1 and the fifth colored line PL5A are arranged in the Y direction. In the pixels PX in which the second colored line PL2 and the fifth colored line PL5B are provided in the second region R2, the second colored line PL2 and the fifth colored line PL5B are arranged in the Y direction. In the pixels PX in which the third colored line PL3 and the fifth colored line PL5C are provided in the third region R3, the third colored line PL3 and the fifth colored line PL5C are arranged in the Y direction. The fifth colored lines PL5A, PL5B and PL5C exhibit the same color. This color differs from the colors exhibited by the first colored line PL1, the second colored line PL2 and the third colored line PL3.

In the display 1C, the fifth colored lines are provided over the entirety of the first to third portions. That is, the fifth colored line PL5A is provided over the entire first portion, the fifth colored line PL5B is provided over the entire second portion, and the fifth colored line PL5C is provided over the entire third portion. Further, in the display 1C, in each pixel PX including the fifth colored line, the sum of the dimensions of the first colored line PL1 in the Y direction and the fifth colored line PL5A provided in the first portion in the Y direction, the sum of the dimensions of the second colored line PL2 in the Y direction and the fifth colored line PL5B provided in the second portion in the Y direction, and the sum of the dimensions of the third colored line PL3 in the Y direction and the fifth colored line PL5C provided in the third portion in the Y direction are the same.

The dimensions, shapes and positions described above for the first colored line PL1, the second colored line PL2 and the third colored line PL3 can also be applied to the fifth colored lines PL5A, PL5B and PL5C. In addition, as with the above embodiments, an absolute value of a difference between an arithmetic mean W_{AV}1 of the width W1 of the first region R1, the width W2 of the second region R2 and the width W3 of the third region R3 and the width W1, an absolute value of a difference between the arithmetic mean W_{AV}1 and the width W2, and an absolute value of a difference between the arithmetic mean W_{AV}1 and the width W3 are such that the ratios of each of the absolute values to the arithmetic mean W_{AV}1 are each preferably in the range of 0% to 20%. In this case, an absolute value of a difference between the arithmetic mean W_{AV}1 and a width W5A of the fifth colored line provided in the first region R1, an absolute value of a difference between the arithmetic mean W_{AV}1 and a width W5B of the fifth colored line provided in the second region R2, and an absolute value of a difference between the arithmetic mean W_{AV}1 and a width W5C of the fifth colored line provided in the third region R3 are such that the ratios of each of the absolute values to the arithmetic mean W_{AV}1 are each preferably in the range of 0% to 20%.

Each pixel PX differs from one or more other pixels PX in one or more of the dimension of the first colored line PL1 in the Y direction, the dimension of the second colored line PL2 in the Y direction, and the dimension of the third colored line PL3 in the Y direction. That is, each pixel PX differs from one or more other pixels PX in the total area of the fifth colored lines PL5A, PL5B and PL5C. With this configuration, the display 1C displays a gradation display image.

Since the display 1C further includes the fifth colored lines, it has a wider range of reproducible colors than that of the display 1A. For example, when the first colored line PL1 is made of cyan ink, the second colored line PL2 is made of magenta ink, the third colored line PL3 is made of yellow ink, and the fifth colored lines PL5A, PL5B and PL5C are made of black ink, the display 1C can display a gradation display image with a high contrast ratio.

Also in the display 1C, the colored lines adjacent in the X and Y directions are preferably spaced from each other as described above with reference to the display 1A. In this case, the distance between the adjacent colored lines is preferably in the ranges described above with reference to the display 1A.

### <1.5> Fourth Modification

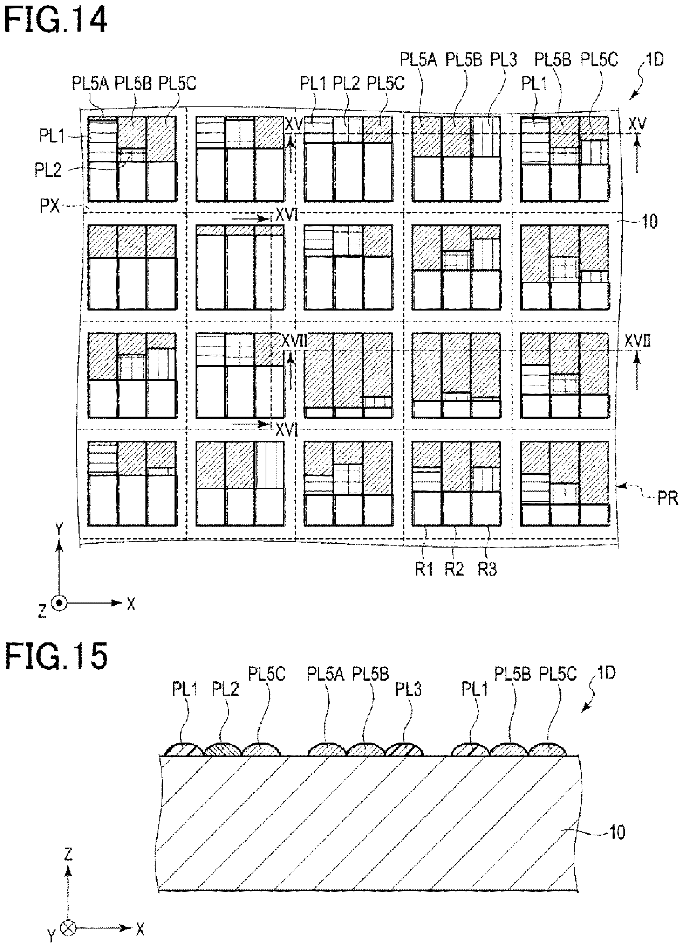

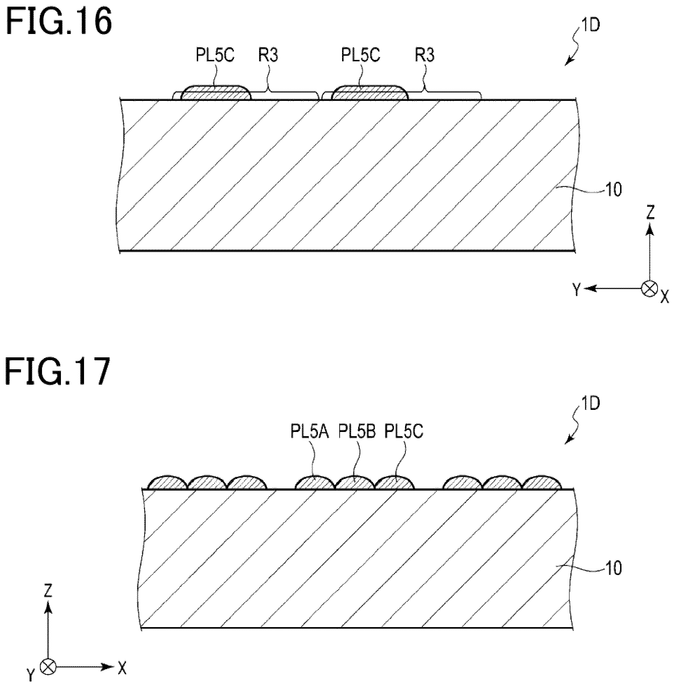

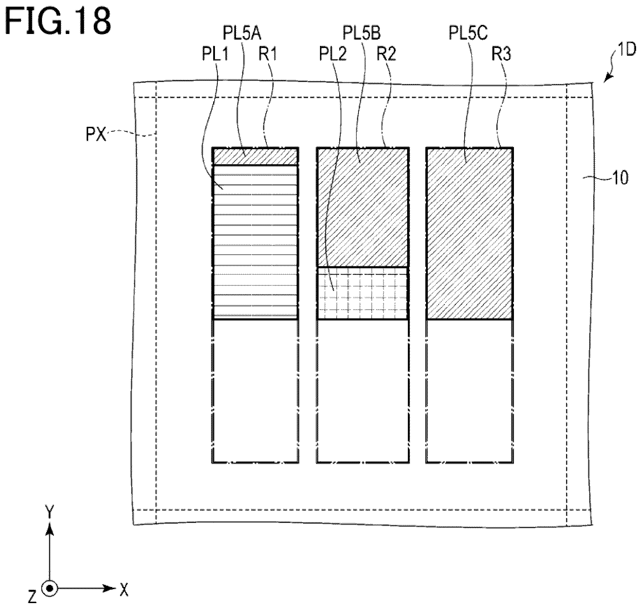

Fig. 14 is an enlarged plan view of a part of a display according to a fourth modification. Fig. 15 is a cross-sectional view taken along the line XV-XV of the display shown in Fig. 14. Fig. 16 is a cross-sectional view taken along the line XVI-XVI of the display shown in Fig. 14. Fig. 17 is a cross-sectional view taken along the line XVII-XVII of the display shown in Fig. 14. Fig. 18 is a further enlarged plan view of a part of the display shown in Fig. 14.

A display 1D shown in Figs. 14 to 18 is the same as the display 1C described above with reference to Figs. 9 and 13, except that the following configuration is employed.

That is, in the display 1D, in at least some of the pixels PX, a fifth colored line is provided only in part of the first to third portions. Specifically, in one or more pixels PX in which the first region R1 includes the first portion, the fifth colored line PL5A is provided only in part of the first portion. In one or more pixels PX in which the second region R2 includes the second portion, the fifth colored line PL5B is provided only in part of the second portion. Further, in one or more pixels PX in which the first region R1 includes the third portion, the fifth colored line PL5C is provided only in part of the third portion.

Also in the display 1D, as with the display 1C, in each pixel PX including the fifth colored line, the sum of the dimensions of the first colored line PL1 in the Y direction and the fifth colored line PL5A provided in the first portion in the Y direction, the sum of the dimensions of the second colored line PL2 in the Y direction and the fifth colored line PL5B provided in the second portion in the Y direction, and the sum of the dimensions of the third colored line PL3 in the Y direction and the fifth colored line PL5C provided in the third portion in the Y direction are the same.

In the display 1D, for example, the brightness of each pixel PX can change depending on the difference between the total area of the first to third portions and the total area of the fifth colored lines PL5A, PL5B and PL5C. Therefore, the display 1D has a high degree of freedom in image expression compared with the display 1C.

### <1.6> Fifth Modification

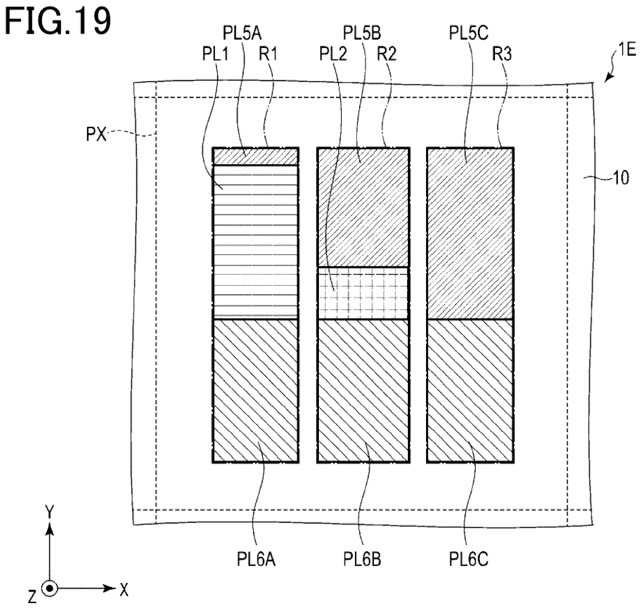

Fig. 19 is an enlarged plan view of a part of a display according to a fifth modification.

A display 1E shown in Fig. 19 is the same as the display 1D described above with reference to Figs. 14 and 18, except that the following configuration is employed.

That is, in the display 1E, in at least some of the pixels PX, a fifth colored line is provided only in part of the first to third portions, and a sixth colored line that exhibits a color different from the colors of the first colored line PL1, the second colored line PL2, the third colored line PL3 and the fifth colored lines PL5A, PL5B and PL5C is provided in a portion of the first to third portions in which the fifth colored line is not provided. The sixth colored line extends in the Y direction over the entire width of each portion. Specifically, a sixth colored line PL6A is provided in a portion of the first portion in which the fifth colored line PL5A is not provided. A sixth colored line PL6B is provided in a portion of the second portion in which the fifth colored line PL5B is not provided. Further, a sixth colored line PL6C is provided in a portion of the third portion in which the fifth colored line PL5C is provided. The sixth colored lines PL6A, PL6B and PL6C are printed lines. The sixth colored lines PL6A, PL6B and PL6C exhibit the same color. This color differs from the colors exhibited by the first colored line PL1, the second colored line PL2, the third colored line PL3 and the fifth colored lines PL5A, PL5B and PL5C.

According to one example, the first colored line PL1 is made of ink that exhibits one of cyan, magenta and yellow, the second colored line PL2 is made of ink that exhibits another of cyan, magenta and yellow, the third colored line PL3 is made of ink that exhibits the remaining one of cyan, magenta and yellow, the fifth colored lines PL5A, PL5B and PL5C are made of ink that exhibit black, and the sixth colored lines PL6A, PL6B and PL6C are made of ink that exhibit white.

The dimensions, shapes and positions described above for the first colored line PL1, the second colored line PL2 and the third colored line PL3 can also be applied to the sixth colored lines PL6A, PL6B and PL6C. In addition, as with the above embodiments, an absolute value of a difference between an arithmetic mean W_{AV}1 of the width W1 of the first region R1, the width W2 of the second region R2 and the width W3 of the third region R3 and the width W1, an absolute value of a difference between the arithmetic mean W_{AV}1 and the width W2, and an absolute value of a difference between the arithmetic mean W_{AV}1 and the width W3 are such that the ratios of each of the absolute values to the arithmetic mean W_{AV}1 are each preferably in the range of 0% to 20%. In this case, an absolute value of a difference between the arithmetic mean W_{AV}1 and a width W6A of the sixth colored line provided in the first region R1, an absolute value of a difference between the arithmetic mean W_{AV}1 and a width W6B of the sixth colored line provided in the second region R2, and an absolute value of a difference between the arithmetic mean W_{AV}1 and a width W6C of the sixth colored line provided in the third region R3 are such that the ratios of each of the absolute values to the arithmetic mean W_{AV}1 are each preferably in the range of 0% to 20%.

The display 1D described above with reference to Figs. 14 to 18 does not include the sixth colored lines. Therefore, for example, when the substrate 10 is transparent to visible light, an object located on a rear surface side of the display 1D affects the image displayed by the display 1D in the print region PR. Further, when the substrate 10 is not transparent to visible light, a front surface of the substrate 10 may affect the image displayed by the display 1D in the print region PR. The sixth colored lines PL6A, PL6B and PL6C included in the display 1E can reduce the above influence.

### <1.7> Sixth Modification

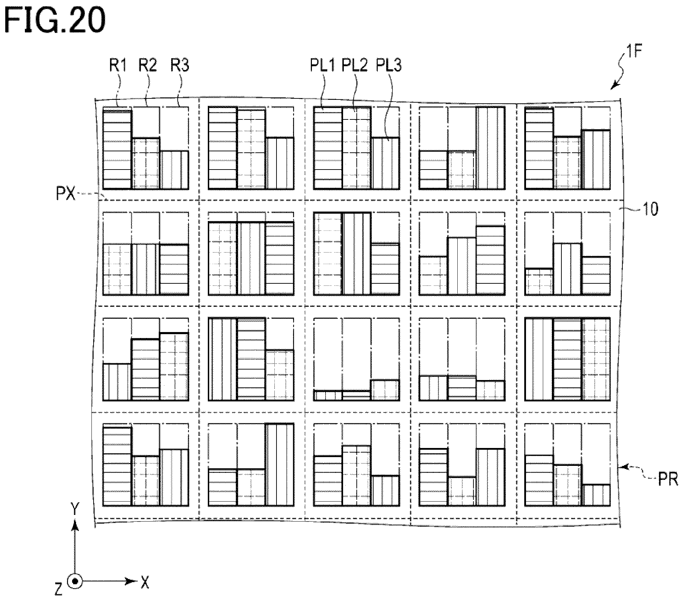

Fig. 20 is an enlarged plan view of a part of a display according to a sixth modification.

A display 1F shown in Fig. 20 is the same as the display 1A described above with reference to Figs. 6 and 7, except that the following configuration is employed.

That is, in the display 1F, in the pixels PX adjacent in the X direction, the first region R1, the second region R2 and the third region R3 are arranged in the same order. On the other hand, in the pixels PX adjacent in the Y direction, the first region R1, the second region R2 and the third region R3 are arranged in different orders from each other.

In this embodiment, the pixels PX form a plurality of groups of pixel rows respectively extending in the X direction and arranged in the Y direction. Each group of pixel rows is composed of first to third rows respectively extending in the X direction and arranged in the Y direction. Each of the first to third rows is composed of a plurality of pixels PX arranged in the X direction. In the pixels PX included in the first row, the first region R1, the second region R2 and the third region R3 are arranged in this order in the X direction. In the pixels PX included in the second row, the third region R3, the first region R1 and the second region R2 are arranged in this order in the X direction. In the pixels PX included in third row, the second region R2, the third region R3 and the first region R1 are arranged in this order in the X direction.

The display 1F having such a configuration can also display a gradation display image as with the display 1A.

### <1.8> Other Modifications

In the displays 1B to 1F, the colored lines adjacent in the X direction may be in contact with each other. Further, the first colored line PL1, the second colored line PL2 and the third colored line PL3 adjacent in the X direction may be spaced from each other, and the fifth colored lines PL5A, PL5B and PL5C adjacent in the X direction may be in contact with each other. Similarly, the first colored line PL1, the second colored line PL2 and the third colored line PL3 adjacent in the X direction may be spaced from each other, and the sixth colored lines PL6A, PL6B and PL6C adjacent in the X direction may be in contact with each other.

Since the fifth colored lines PL5A, PL5B and PL5C are the same color, they may partially overlap each other. A difference between the arithmetic mean W_{AV}1 and the width W5A of the fifth colored line PL5A, a difference between the arithmetic mean W_{AV}1 and the width W5B of the fifth colored line PL5B, and a difference between the arithmetic mean W_{AV}1 and the width W5C of the fifth colored line PL5C are such that the ratios of each of the differences to the arithmetic mean W_{AV}1 are each preferably in the range of -20% to 34%.

Since the sixth colored lines PL6A, PL6B and PL6C are also the same color, they may partially overlap each other. A difference between the arithmetic mean W_{AV}1 and the width W6A of the sixth colored line PL6A, a difference between the arithmetic mean W_{AV}1 and the width W6B of the sixth colored line PL6B, and a difference between the arithmetic mean W_{AV}1 and the width W6C of the sixth colored line PL6C are such that the ratios of each of the differences to the arithmetic mean W_{AV}1 are each preferably in the range of -20% to 34%.

The arrangement order described above for the display 1F may be applied to the displays 1 and 1C to 1E. That is, in the displays 1 and 1C to 1E, in the pixels PX adjacent in the X direction, the first region R1, the second region R2 and the third region R3 may be arranged in the same order, and in the pixels PX adjacent in the Y direction, the first region R1, the second region R2 and the third region R3 may be arranged in different orders from each other. Further, in the display 1B, in the pixels PX adjacent in the X direction, the first region R1, the second region R2, the third region R3 and the fourth region R4 may be arranged in the same order, and in the pixels PX adjacent in the Y direction, the first region R1, the second region R2, the third region R3 and the fourth region R4 may be arranged in different orders from each other.

Furthermore, in the display 1B, the sixth colored line described above for the display 1E may be provided in each of a first portion of the first region R1 in which the first colored line PL1 is not provided, a second portion of the second region R2 in which the second colored line PL2 is not provided, a third portion of the third region R3 in which the third colored line PL3 is not provided, and a fourth portion of the fourth region R4 in which the fourth colored line PL4 is not provided.

### <1.4> Production of Display

### <1.4.1> Printing Method

The displays 11A to 1F can be obtained by forming the pixels PX on the substrate 10 using a printing method. The printing method may be a known method. Intaglio printing represented by gravure printing is preferred, and gravure offset printing is particularly preferred. The device used for printing may also be a known device. For intaglio printing represented by gravure printing, for example, a printing device can be used which includes a metal intaglio plate on which grooves corresponding to the colored lines are formed.

Gravure offset printing is also called intaglio plate offset printing. Gravure offset printing uses a gravure plate (intaglio plate) on which recesses corresponding to the printing pattern are formed, a doctor blade used for filling ink into the recesses of the gravure plate, and a blanket having a surface made of, for example, silicone rubber.

In gravure offset printing, ink is transferred from the recesses of the gravure plate onto the blanket. The substrate is supplied facing the blanket, and by pressing them together, the ink on the blanket is transferred onto the substrate.

When printing is performed on a plurality of substrates using a single blanket, it is preferred to include a step of drying the blanket that has absorbed the solvent after printing. This drying step may be performed every printing cycle, or may be performed every multiple printing cycles, for example, 5 to 20 printing cycles.

The ink transferred on the substrate may be heat-cured by, for example, hot air or infrared irradiation. Alternatively, the ink transferred on the substrate may be cured by light irradiation or by being allowed to stand for several days. Thus, a printing pattern is formed on the substrate.

In gravure offset printing, a gravure plate may be a known plate. The gravure plate and the blanket may be flat or cylindrical. In order to achieve high productivity, a plate cylinder can be used as a gravure plate, and a blanket cylinder in which a surface of a cylinder with high rigidity, such as a metal cylinder, is covered with a blanket material can be used as a blanket.

Examples of the blanket material include elastic materials such as silicone resin, fluororesin, urethane resin, synthetic rubber and natural rubber. Among these, silicone resins such as silicone rubber is preferred since they have high durability and oil-resistance, sufficient elasticity and moderate stiffness. A blanket cylinder in which a blanket material is made of silicone resin such as silicone rubber is particularly suitable for performing gravure offset printing on a hard substrate. Further, the blanket cylinder may also be one in which a composite material obtained by forming an elastic material layer such as a silicone rubber layer on a plastic film such as a polyester film is wound around a cylindrical body.

According to the above printing method, for example, colored lines having a large height-to-width ratio and a smooth surface can be formed on the substrate with high shape and positional accuracy.

### <1.4.2> Substrate

The substrate 10 can be paper, a polymer film, a glass plate, a metal plate, or a composite including one or more thereof. From the viewpoint of visibility of the image displayed by the printing pattern, the print surface of the substrate 10 is preferably made of paper or plastic. A substrate 103 may have a thickness of 10 µm or more and 3 mm or less, but is not limited thereto. Further, the long side of the substrate 103 may have a length of 3 cm or more and 3 m or less, but is not limited thereto.

Examples of the paper used for the substrate 10 include various types of paper used for ordinary publication displays and advertising materials, having excellent surface texture. Such paper may be, for example, mirror coated paper, coated paper, art paper or high-quality paper, and may also be carton paper or paper board used for packaging materials. Further, synthetic papers such as YUPO (registered trademark) available from Yupo Corporation and Peach Coat (registered trademark) available from Daio Postal Chemical Corporation are also preferred since they have less expansion and contraction.

A polymer film that can be used for the substrate 10 can be a plastic film. The plastic film can be a cast molded film. Examples of the plastic film include polyesters such as polyethylene terephthalate (PET) and polyethylene naphthalate (PEN); polyolefins such as polyethylene, polypropylene, polymethylpentene; cellulose esters such as cellophane, cellulose diacetate, cellulose triacetate (TAC), cellulose acetate butyrate, cellulose acetate propionate (CAP), cellulose acetate phthalate and cellulose nitrate, and derivatives thereof; polyvinylidene chloride; polyvinyl alcohol; polyethylene vinyl alcohol; syndiotactic polystyrenes; polycarbonates; polyether ketones; polyimides; polyethersulfone (PES); polyphenylene sulfide; polysulfones; polyetherimides; polyether ketone imides; polyarylates; acrylic resins such as polymethylmethacrylate (PMMA); and cycloolefin resins such as norbornene resin.

The glass plate that can be used for the substrate 10 can be a glass plate made of soda lime glass, barium strontium-containing glass, lead glass, aluminosilicate glass, borosilicate glass, barium borosilicate glass or quartz glass.

The metal plate that can be used for the substrate 10 can be a copper plate, a brass plate, an aluminum plate, an aluminum alloy plate, a stainless steel plate or a steel plate. These metal plate are preferably rolled plates.

### <1.4.3> Ink

According to one example, the inks used for forming the first colored line PL1, the second colored line PL2 and the third colored line PL3 may be inks exhibiting three subtractive primary colors, that is, cyan, magenta and yellow, and according to another example, the inks used for forming the first colored line PL1, the second colored line PL2 and the third colored line PL3 may be inks exhibiting three additive primary colors, that is, red, green and blue. According to one example, the inks used for forming the first colored line PL1, the second colored line PL2, the third colored line PL3 and the fourth colored line PL4 may be inks exhibiting cyan, magenta, yellow and black. Further, according to one example, the inks used for forming the first colored line PL1, the second colored line PL2 and the third colored line PL3 may be inks exhibiting magenta and yellow, and the ink used for forming the fifth colored lines PL5A, PL5B and PL5C may be an ink exhibiting black. Further, according to one example, the inks used for forming the first colored line PL1, the second colored line PL2 and the third colored line PL3 may be inks exhibiting magenta and yellow, the ink used for forming the fifth colored lines PL5A, PL5B and PL5C may be an ink exhibiting black, and the ink used for forming the sixth colored lines PL6A, PL6B and PL6C may be an ink exhibiting white. The inks used for forming the colored lines may be inks exhibiting other colors.

Depending on the printing method, the ink may be offset ink, letterpress ink, gravure ink, or the like, and depending on the composition, the ink may be, for example, resin ink, oil-based ink, water-based ink, or the like. Furthermore, depending on the drying method, the ink may be oxidative polymerization type ink, penetration drying type ink, evaporation drying type ink, a UV curing ink, or the like. A functional ink whose color changes according to an illumination angle or an observation angle may also be used. Examples of such functional ink include optical variable ink, color shift ink, and pearl ink.

The inks contain colorants and vehicles. The inks may further contain additives.

The colorants may be pigments, dyes, or a combination thereof.

The dyes may be acid dyes, basic dyes, solvent dyes, disperse dyes, or a combination of two or more thereof.

The pigments may be inorganic pigments, organic pigments, or a combination thereof.

The inorganic pigments may be composed of metal particles, particles made of oxides, hydroxides, sulfides, selenides, ferrocyanides, chromates, sulfates, carbonates, silicates, phosphates or carbon, particles containing two or more thereof, or a combination of two or more thereof. The oxide may be titanium dioxide, zinc white (zinc oxide) or iron black (black iron oxide).

The organic pigments may be carbon compounds, nitroso compounds, nitro compounds, azo compounds, lake compounds, phthalocyanine compounds or fused polycyclic materials. For example, disazo yellow, brilliant carmine and phthalocyanine blue can be used as the organic pigments.

The pigments or dyes may be fluorescent pigments, phosphorescent pigments, quantum dots, or a combination of two or more thereof.

In addition to these pigments and dyes contained for color display, conductive materials may also be contained in the ink in order to impart conductivity to the printed pattern. Examples of the conductive materials include metal particles, metal nanowires, conductive metal oxide particles, conductive polymer particles, and a combination of two or more thereof. Examples of the conductive polymer include conductive polyaniline, conductive polypropyrrole and conductive polythiophene, for example, a complex of polyethylene dioxythiophene and polystyrene sulfonic acid.

The vehicle is a medium in which a colorant is dispersed. The vehicle contains at least one of an oil and a resin.

The oil may be a vegetable oil, a processed oil, a mineral oil, or a mixture of two or more. The resin may be a natural resin, a natural product derivative, a synthetic resin, or a mixture of two or more.

The vehicle contains, as at least part of the above oil or resin, a curable material that cures into a solid. The curable material may be relatively low molecular weight curable compounds or curable resins, such as epoxy resins and multifunctional acrylic monomers or oligomers. Further, mixtures thereof can also be used. The oil may include those do not have functional groups that cause curing properties.

Examples of the oils and resins include polyesters, polycarbonates, polyvinyl chloride, copolymers of vinyl chloride and other unsaturated double bond-containing monomers, polyvinyl acetate, vinyl chloride-vinyl acetate copolymers, ethylene-vinyl acetate copolymers, homopolymers of (meth)acrylic acid ester, copolymers of (meth)acrylic acid ester and other unsaturated double bond-containing monomers, polystyrene, copolymers of styrene and other unsaturated double bond-containing monomers, ketone-formaldehyde condensates or hydrogenated products thereof, epoxy resins, phenoxy resins, polyvinyl acetal or copolymers thereof, polyurethanes, polyureas and polyamides. These can be used singly or in combination of two or more.

Other examples of the oils and resins include the same polymers as those described above except that curable functional groups are contained in side chains or ends. The curable compounds or curable resins are particularly preferably polyvalent alcohols, epoxy resins, glycidyl compounds, polyvalent carboxylic acids or (meth)acrylate monomers or oligomers.

The compounds described above for the oils and resins can be used singly or in combination of two or more.

The vehicle can further contain a solvent such as an organic solvent.

The organic solvent may be a hydrocarbon solvent, an alcohol solvent, a glycol ether or glycol ester solvent, a terpene solvent, or a combination of two or more thereof.

Examples of the hydrocarbon solvent include saturated or unsaturated aliphatic hydrocarbon compounds such as tetradecane, octadecane, heptamethylnonane, tetramethylpentadecane, hexane, heptane, octane, nonane, decane, tridecane, methylpentane, normal paraffin and isoparaffin; cyclic hydrocarbon compounds such as toluene and xylene; alicyclic hydrocarbon compounds such as limonene, dipentene, terpinene, nessol, cinene, orange flavor, terpinolene, phellandrene, menthadiene, terebene, dihydrocymene, moslene, isoterpinene, crithmene, kautschin, cajeputene, eulimen, pinene, terebine, menthane, pinane, terpene and cyclohexane; and combinations of two or more thereof.

Examples of the alcohol solvent include aliphatic alcohols, for example, saturated or unsaturated aliphatic alcohols having 6 to 30 carbon atoms, such as heptanol, octanol, decanol, lauryl alcohol, tetradecyl alcohol, cetyl alcohol, 2-ethyl-1-hexanol, octadecyl alcohol, hexadecenol and oleyl alcohol; alicyclic alcohols, for example, cyclohexanol, cresol, eugenol, myrtenol, sobrerol, menthol, carveol, perillyl alcohol, pinocarveol, sobrerol, verbenol, and terpene alcohols, for example, monoterpene alcohols such as terpineol and dihydroterpene; polyvalent alcohols such as diols and triols, for example, ethylene glycol, diethylene glycol, triethylene glycol, tripropylene glycol, 1,3-propanediol, 1,2-butanediol, 2-butene-1,4-diol, 1,2-hexanediol, propylene glycol, dipropylene glycol, 1,3-butylene glycol, 2-methylpentane-2,4-diol, 3-methyl-1,5-pentanediol, 2,4-diethyl-1,5-pentanediol, 2-ethyl-1,3-hexanediol, glycerin, 1,2,4-butanetriol and 1,2,6-hexanetriol; monoalcohols such as butyl triglycol, isobutyl diglycol, 2-butoxyethanol, 3-methoxy-3-methylbutanol, 2-(2-methoxy ethoxy)ethanol and 2-(2-hexyloxyethoxy)ethanol; and combinations of two or more thereof.

Examples of the glycol ether or glycol ester solvent include tripropylene glycol-n-butyl ether, butyl carbitol, diethylene glycol monomethyl ether, tripropylene glycol methyl ether, diethylene glycol monoethyl ether acetate, diethylene glycol monobutyl ether acetate, triethylene glycol dimethyl ether, dipropylene glycol methyl ether acetate, ethylene glycol monohexyl ether, dipropylene glycol methyl ether, propylene glycol diacetate, 1,4-butanediol divinyl ether, ethylene glycol monobutyl ether, ethylene glycol monomethyl ether acetate, and combinations of two or more thereof.

In a quick-drying ink, a solvent having a low boiling point that evaporates at room temperature, for example, methyl ethyl ketone, ethanol and acetone can be used as at least part of the solvent. In a water-based ink, water such as purified water can be used as at least part of the solvent.

The inks may further contain additives. Examples of the additives include waxes, plasticizers, drying accelerators, surfactants, gelling agents, stabilizers, defoamers, and combinations of two or more thereof.

The solid materials contained in the ink may have a size smaller than the width and height of the colored line, and is preferably one-half or less of the height of the colored line.

The content of the solids in the ink is preferably 50 mass% or more, and more preferably 70% mass or more. As this content increases, the flow of ink during transfer is suppressed, which is advantageous in forming colored lines with high shape accuracy.

### <1.5> Effects

The effects of the above displays 1 and 1A to 1F will be described below, taking the display 1 as an example.

When the display 1 described above with reference to Figs. 1 to 5 is illuminated with white light, for example, in a direction perpendicular to the Y direction, a part of the light is reflected by the surfaces of the first colored lines PL1, the second colored lines PL2 and third colored lines PL3, and another part of the light passes through the first colored lines PL1, the second colored lines PL2 and the third colored lines PL3, is reflected by the substrate 10, and again passes through the first colored lines PL1, the second colored lines PL2 and the third colored lines PL3. Hereinafter, the light that has been reflected by the surfaces of the first colored lines PL1, the second colored lines PL2 and the third colored lines PL3 is called first light. Further, hereinafter, the light that has passed through the first colored lines PL1, the second colored lines PL2 and the third colored lines PL3, has been reflected by the substrate 10, and has again passed through the first colored lines PL1, the second colored lines PL2 and the third colored lines PL3 is called second light.

The first light is white light. The intensity of the first light emitted in certain directions by the first colored lines PL1, the second colored lines PL2 and the third colored lines PL3 are influenced by the illumination direction and the surface texture of the colored lines. Specifically, since the first colored lines PL1, the second colored lines PL2 and the third colored lines PL3 are linear, the direction of the first light emitted by the colored lines under the above illumination conditions is perpendicular to the length direction of the colored lines throughout their entire length, that is, perpendicular to the Y direction. Further, among the contours of each of the first colored lines PL1, the second colored lines PL2 and the third colored lines PL3 in the cross section perpendicular to the Y direction, when a portion corresponding to the top of the first colored lines PL1 has a convex curve shape, the direction of the first light emitted by these colored lines spreads in a plane perpendicular to the Y direction.

On the other hand, the second light is colored light. When the substrate surface has unevenness, for example, when the substrate 10 is paper, the illumination direction does not have a large influence on the intensity of the second light. Further, the surface texture of the first colored lines PL1, the second colored lines PL2 and the third colored lines PL3 have little influence on the intensity of the second light.

When the first colored line PL1, the second colored line PL2 and the third colored line PL3 are not significantly different in the cross-sectional shape in a direction perpendicular to the Y direction, the intensity ratio of the first light and the second light emitted in one direction perpendicular to the Y direction by these colored lines under the above illumination conditions is not significantly different among the first colored line PL1, the second colored line PL2 and the third colored line PL3. Further, in this case, among the contours of the respective colored lines in the cross-section perpendicular to the Y direction, when a portion corresponding to the top of the colored lines has a convex curve shape, the intensity ratio of the first light and the second light emitted by the respective colored lines is substantially constant over a relatively large angular range in a plane perpendicular to the Y direction. Therefore, if the intensity of the first light is sufficiently high, the observer observing the display 1 in a direction perpendicular to the Y direction under the above illumination conditions recognizes that the display 1 has glossiness.

When the observation direction changes in a plane perpendicular to the Y direction, the region with the maximum intensity ratio shifts within the display plane according to the change in observation angle. Similarly, when the observation direction changes in a plane perpendicular to the X direction, the region with the maximum intensity ratio shifts within the display plane according to the change in observation angle. Accordingly, the observer recognizes strong glossiness.

In the display 1, the first colored lines PL1, the second colored lines PL2 and the third colored lines PL3 contribute to the glossiness. Therefore, for example, if the surface of the substrate 10 does not make the observer recognize glossiness, the observer recognizes strong glossiness in regions with high image density, and recognizes weak or no glossiness in regions with low image density.

Moreover, as will be described below, the glossiness recognized by the observer observing the display 1 when the observation direction is a direction perpendicular to the Y direction and inclined relative to the X direction may differ from the glossiness recognized by the observer when the observation direction is the Z direction or when the observation direction is a direction perpendicular to the X direction and inclined relative to the Y direction.

When the distances between the center lines of the first colored line PL1, the second colored line PL2 and the third colored line PL3 adjacent in the X direction are substantially equal to each other, the reflected light from the colored lines may cause constructive or destructive interference. Therefore, in this case, as the observation direction changes from the Z direction to a direction perpendicular to the Y direction and inclined relative to the X direction, the wavelengths that cause constructive or destructive interference change. Such a change does not occur when the observation direction changes from the Z direction to a direction perpendicular to the X direction and inclined relative to the Y direction. Therefore, the glossiness recognized by the observer observing the display 1 when the observation direction is a direction perpendicular to the Y direction and inclined relative to the X direction may differ from the glossiness recognized by the observer when the observation direction is the Z direction or when the observation direction is a direction perpendicular to the X direction and inclined relative to the Y direction.

These optical effects are difficult to reproduce by other structures. Further, even if the display 1 is copied, it is not possible to form a printing pattern having the same shape as that of the above colored lines, so the above optical effects cannot be reproduced. Furthermore, the above optical effects can be verified without a verification tool. Moreover, when the display 1 is observed with a lens having several tens of times magnification, differences between the shape of the colored lines of the display 1 and the printing pattern of the copied article can be observed. Therefore, the display 1 has high anti-counterfeiting effect.

In addition, in production of the display 1, since the colored lines can be spaced from each other, high positional accuracy is not required. Further, the display 1 can be produced without complicated steps.

That is, in addition to having high anti-counterfeiting effect, the display 1 does not require extremely high positional accuracy in production, and can be produced at relatively low cost.

### <2> Second Embodiment

### <2.1> Configuration of Display

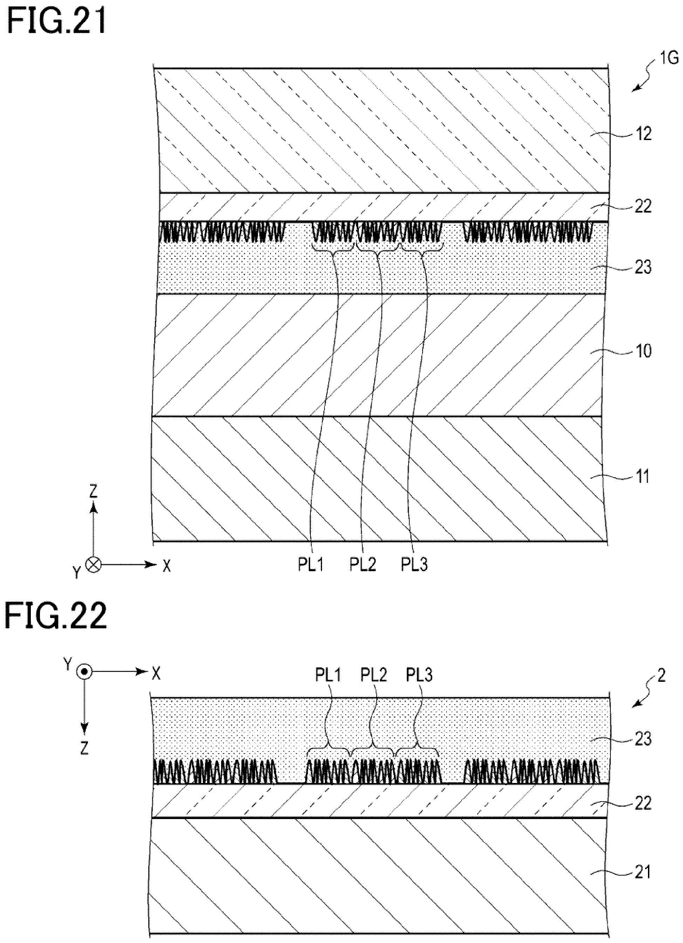

FIG. 21 is an enlarged cross-sectional view of a part of a display according to a second embodiment of the present invention.

A display 1G shown in Fig. 21 is the same as the display 1 described above with reference to Figs. 1 to 5, except that the following configuration is employed. That is, the display 1G further includes a light scattering layer 11, a transparent layer 12, a relief structure forming layer 22, a vapor deposition layer and an adhesive layer 23.

The light scattering layer 11 is provided on the rear surface of the substrate 10. The light scattering layer 11 may be made of, for example, a mixture of transparent particles and a transparent resin having a refractive index different from that of the transparent particles. For example, when the substrate 10 is transparent, the light scattering layer 11 enhances the visibility of a gradation display image displayed by a group of colored lines. The light scattering layer 11 can be omitted.

The transparent layer 12 faces the substrate 10 with the colored lines and the like therebetween. A surface of the transparent layer 12 constitutes the front surface of the display 1G. The transparent layer 12 may be made of, for example, a transparent resin. The transparent layer 12 protects the colored lines from damage. The transparent layer 12 can be omitted.

The relief structure forming layer 22 is located between the substrate 10 and the transparent layer 12. The relief structure forming layer 22 is made of a transparent resin. A surface of the relief structure forming layer 22 facing the substrate 10 is provided with a relief type diffraction grating as a relief structure.

Specifically, a relief type first diffraction grating is provided in a region corresponding to a first region R1 on the surface of the relief structure forming layer 22 facing the substrate 10. The first diffraction grating may be further provided in a region corresponding to gaps between the first regions R1 adjacent in the Y direction on the surface of the relief structure forming layer 22 facing the substrate 10.

A relief type second diffraction grating is provided in a region corresponding to a second region R2 on the surface of the relief structure forming layer 22 facing the substrate 10. The second diffraction grating may be further provided in a region corresponding to gaps between the second regions R2 adjacent in the Y direction on the surface of the relief structure forming layer 22 facing the substrate 10.

Further, a relief type third diffraction grating is provided in a region corresponding to a third region R3 on the surface of the relief structure forming layer 22 facing the substrate 10. The third diffraction grating may be further provided in a region corresponding to gaps between the third regions R3 adjacent in the Y direction on the surface of the relief structure forming layer 22 facing the substrate 10.

The first to third diffraction gratings are designed to emit diffracted lights having different wavelengths in the same direction when illuminated with white light in one direction. The first to third diffraction gratings may have, for example, different grating constants, different arrangement directions of repeating structures such as grating lines, or both of these.

The vapor deposition layer covers a part of the surface of the relief structure forming layer 22 facing the substrate 10. The vapor deposition layer may be made of, for example, a metal, an alloy or an inorganic compound. Examples of materials of the vapor deposition layer include materials with a high refractive index, such as TiO₂, Si₂O₃, SiO₂, Fe₂O₃ and ZnS, and materials with high reflectivity, such as Al, Ag, Sn, Cr, Ni, Cu, Au, and alloys containing one or more thereof. The vapor deposition layer may have a single-layer structure or a multilayer structure.

As described above, the vapor deposition layer covers a part of the surface of the relief structure forming layer 22 facing the substrate 10. Specifically, the vapor deposition layer covers a part of the first diffraction grating, a part of the second diffraction grating and a part of the third diffraction grating. A portion of the vapor deposition layer that covers the first diffraction grating is a first colored line PL1, a portion that covers the second diffraction grating is a second colored line PL2, and a portion that covers the third diffraction grating is a third colored line PL3. That is, the display 1G is provided with the colored lines including the vapor deposition layer, instead of the colored lines made of ink.

The adhesive layer 23 is located between the relief structure forming layer 22 on which the vapor deposition layer is provided and the substrate 10 to bond them together. The adhesive layer 23 may be made of, for example, a transparent resin.

### <2.2> Transfer Foil

In production of the display 1G, a transfer foil can be used.

Fig. 22 is an enlarged cross-sectional view of a part of a transfer foil that can be used for producing the display shown in Fig. 21.

A transfer foil 2 shown in Fig. 22 includes a support 21, a relief structure forming layer 22, a vapor deposition layer and an adhesive layer 23.

The support 21 releasably supports a laminate of the relief structure forming layer 22, the vapor deposition layer and the adhesive layer 23.

The support 21 is preferably made of a material that is less likely to deform or degrade due to heat, pressure, and the like applied during transfer. For example, the support 21 may be a rigid material such as a glass substrate, or may be a plastic film such as a polyethylene terephthalate film, a polyethylene naphthalate film and a polypropylene film. Further, depending on the application or purpose, paper, synthetic paper, plastic multilayer paper, resin-impregnated paper, or the like may be used as the support 21.

The support 21 preferably includes a release layer on a support surface that supports the laminate. As the materials of the release layer, for example, a resin and a lubricant can be used. The resin may be a thermoplastic resin, a thermosetting resin, a UV curing resin or an EB curing resin. Examples of the resin include an acrylic resin, a polyester resin and a polyamide resin. The lubricant may be a wax such as polyethylene powder, paraffin wax, silicone or carnauba wax. The release layer can be obtained by applying these materials on the support 21 by a known method such as gravure printing or micro gravure printing. The thickness of the release layer may be, for example, in the range of 0.5 µm to 5 µm.

The relief structure forming layer 22 is provided on a surface of the support 21 on which the release layer is formed. The relief structure described above is formed on the surface of the relief structure forming layer 22 by transfer, for example.

As described above, the vapor deposition layer covers a part of the surface of the relief structure forming layer 22 on which the relief structure is formed. The vapor deposition layer may be formed, for example, by the following method. First, a vapor deposition material such as a metal, an alloy or an inorganic compound is deposited on substantially the entire surface of the relief structure forming layer 22 to form a vapor deposition material layer. The vapor deposition material may be deposited by vacuum deposition, sputtering, or vapor deposition such as chemical vapor deposition. Then, an etching mask is formed on the vapor deposition material layer. The etching mask may be formed, for example, by photolithography using a photosensitive resin. Subsequently, a portion of the vapor deposition material layer which is not covered with the etching mask is removed by etching to obtain a vapor deposition layer. Then, the etching mask is removed from the vapor deposition layer as necessary.

The adhesive layer 23 covers the relief structure forming layer 22 and the vapor deposition layer. The adhesive layer 23 may be made of, for example, a thermoplastic resin. The adhesive layer 23 can be obtained by, for example, applying an adhesive.

### <2.3> Effects

In the display 1G, each of the first colored line PL1, the second colored line PL2 and the third colored line PL3 serves as a diffraction grating. Further, each pixel PX differs from one or more other pixels PX in the area of one or more of the first colored line PL1, the second colored line PL2 and the third colored line PL3. Accordingly, the display 1G can display a gradation display image using diffracted light. Such optical effects cannot be reproduced by a copied article obtained by copying the display 1G. Furthermore, the above optical effects can be verified without a verification tool. Moreover, when the display 1G is observed with a lens having several tens of times magnification, the shape and arrangement of the colored lines of the display 1G can be observed. Therefore, the display 1G has high anti-counterfeiting effect.

In addition, in production of the display 1G, the length of the colored lines may be adjusted simply by the pattern shape of the etching mask. Further, the display 1G can be produced without complicated steps.

That is, in addition to having high anti-counterfeiting effect, the display 1G does not require extremely high positional accuracy in production, and can be produced at relatively low cost.

### <2.4> Modifications

The techniques described above for the display 1G may be applied to other displays exemplified in the first embodiment. In this case as well, the same effects as those described above can be obtained.

In the transfer foil 2, the vapor deposition layer may not necessarily be patterned. In this case, after the laminate including the relief structure forming layer 22, the vapor deposition layer and the adhesive layer 23 is transferred from the support 21 onto the substrate 10, the vapor deposition layer can be irradiated with infrared laser light so that a portion of the vapor deposition layer irradiated with the laser light is removed to thereby obtain a display 1G. This technique can also be applied to other displays exemplified in the first embodiment.

### Examples

Specific examples and comparative examples of the present invention will be described below.

### <Example 1>

A display 1A described above with reference to Figs. 6 and 7 was produced by the following method.

First, a square film piece with a side length of 200 mm was cut out from a 125 µm-thick colorless transparent polyethylene terephthalate film. This film piece was used as a substrate 10.

Next, first colored lines PL1, second colored lines PL2 and third colored lines PL3 were formed on the substrate 10 by gravure offset printing. The first colored lines PL1, the second colored lines PL2 and the third colored lines PL3 were formed using blue ink, green ink and red ink, respectively.

The display 1A thus obtained was observed with a laser microscope, and the dimensions of the first colored lines PL1, the second colored lines PL2 and the third colored lines PL3, and the dimensions of the pixels PX were measured. Specifically, the measurement was performed at 10 randomly selected positions, which were randomly selected from a portion of the display 1A corresponding to the print region PR, and an image of each position was obtained using a laser microscope. The X and Y directions were specified in these images, and the arithmetic mean of the values obtained at 10 positions was taken as a measurement value.

As a result, the pixel PX had a square shape with a side length of 36 µm. The first colored line PL1 had a width W1P and a height H1 of 9.6 µm and 0.8 µm, respectively. The second colored line PL2 had a width W2P and a height H2 of 9.2 µm and 0.7 µm, respectively. The third colored line PL3 had a width W3P and a height H3 of 11.2 µm and 0.6 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 7, a portion corresponding to the top of each colored line had a convex curved shape.

### <Example 2>

A display 1A described above with reference to Figs. 6 and 7 was produced by the same method as in Example 1, except that the gravure plate was changed. The above display 1A was subjected to the same measurement as in Example 1.

As a result, the pixel PX had a square shape with a side length of 48 µm. The first colored line PL1 had a width W1P and a height H1 of 9.5 µm and 2.5 µm, respectively. The second colored line PL2 had a width W2P and a height H2 of 11.9 µm and 2.3 µm, respectively. The third colored line PL3 had a width W3P and a height H3 of 14.3 µm and 1.7 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 7, a portion corresponding to the top of each colored line had a convex curved shape.

### <Example 3>

A display 1C described above with reference to Figs. 9 to 13 was produced by the following method. However, in this example, the fifth colored lines PL5B and PL5C were omitted in all pixels PX.

First, a square film piece with a side length of 200 mm was cut out from a 125 µm-thick colorless transparent polyethylene terephthalate film. This film piece was used as a substrate 10.

Next, first colored lines PL1, second colored lines PL2, third colored lines PL3 and fifth colored lines PL5A were formed on the substrate 10 by gravure offset printing. The first colored lines PL1, the second colored lines PL2, the third colored lines PL3 and the fifth colored lines PL5A were formed using cyan ink, magenta ink, yellow ink and black ink, respectively. The display 1C thus obtained was subjected to the same measurement as in Example 1.

As a result, the pixel PX had a square shape with a side length of 48 µm. The first colored line PL1 had a width W1P and a height H1 of 9.5 µm and 2.5 µm, respectively. The second colored line PL2 had a width W2P and a height H2 of 11.9 µm and 2.3 µm, respectively. The third colored line PL3 had a width W3P and a height H3 of 14.3 µm and 1.7 µm, respectively. The fifth colored line PL5A had a width W5A and a height H5A of 9.5 µm and 0.7 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, among the contours of each of the fifth colored lines PL5A in the cross-section perpendicular to the Y direction, as shown in Fig. 12, a portion corresponding to the top of the colored line had a convex curved shape.

### <Example 4>

A display 1C described above with reference to Figs. 9 to 13 was produced by the same method as in Example 3, except that the gravure plate was changed. However, also in this example, the fifth colored lines PL5B and PL5C were omitted in all pixels PX. The above display 1C was subjected to the same measurement as in Example 1.

As a result, the pixel PX had a square shape with a side length of 48 µm. The first colored line PL1 had a width W1P and a height H1 of 9.5 µm and 2.5 µm, respectively. The second colored line PL2 had a width W2P and a height H2 of 11.9 µm and 2.3 µm, respectively. The third colored line PL3 had a width W3P and a height H3 of 14.3 µm and 1.7 µm, respectively. The fifth colored line PL5A had a width W5A and a height H5A of 14.3 µm and 0.8 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, among the contours of each of the fifth colored lines PL5A in the cross-section perpendicular to the Y direction, as shown in Fig. 12, a portion corresponding to the top of the colored line had a convex curved shape.

### <Example 5>

A display 1C described above with reference to Figs. 9 to 13 was produced by the same method as in Example 3, except that the gravure plate was changed. However, in this example, the fifth colored lines PL5C were not omitted and the fifth colored lines PL5B were omitted in all pixels PX. The above display 1C was subjected to the same measurement as in Example 1.

As a result, the pixel PX had a square shape with a side length of 48 µm. The first colored line PL1 had a width W1P and a height H1 of 9.5 µm and 2.5 µm, respectively. The second colored line PL2 had a width W2P and a height H2 of 11.9 µm and 2.3 µm, respectively. The third colored line PL3 had a width W3P and a height H3 of 14.3 µm and 1.7 µm, respectively. The fifth colored line PL5A had a width W5A and a height H5A of 9.5 µm and 2.4 µm, respectively. The fifth colored line PL5C had a width W5C and a height H5C of 14.3 µm and 1.6 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, among the contours of each of the fifth colored lines PL5A and PL5C in the cross-section perpendicular to the Y direction, as shown in Fig. 12, a portion corresponding to the top of the colored line had a convex curved shape.

### <Example 6>

A display 1C described above with reference to Figs. 9 to 13 was produced by the same method as in Example 3, except that the gravure plate was changed. However, in this example, the fifth colored lines PL5B and PL5C were not omitted and the fifth colored lines PL5A were omitted in all pixels PX. The above display 1C was subjected to the same measurement as in Example 1.

As a result, the pixel PX had a square shape with a side length of 48 µm. The first colored line PL1 had a width W1P and a height H1 of 9.5 µm and 2.5 µm, respectively. The second colored line PL2 had a width W2P and a height H2 of 11.9 µm and 2.3 µm, respectively. The third colored line PL3 had a width W3P and a height H3 of 14.3 µm and 1.7 µm, respectively. The sum of a width WP5B of the fifth colored line PL5B and a width WP5C of the fifth colored line PL5C, that is, a width W5BC was 31.9 µm, and a height H5 thereof was 0.9 µm.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, in the pixel PX including both the fifth colored lines PL5B and PL5C, the fifth colored lines PL5B and PL5C were connected to each other. In the pixel PX including only one of the fifth colored lines PL5B and PL5C, among the contours of the fifth colored lines in the cross-section perpendicular to the Y direction, as shown in Fig. 12, a portion corresponding to the top of the colored line had a convex curved shape.

### <Example 7>

A display 1C described above with reference to Figs. 9 to 13 was produced by the same method as in Example 3, except that the gravure plate was changed. However, in this example, the fifth colored lines PL5B and PL5C were not omitted and the fifth colored lines PL5A were omitted in all pixels PX. The above display 1C was subjected to the same measurement as in Example 1.

As a result, the pixel PX had a square shape with a side length of 48 µm. The first colored line PL1 had a width W1P and a height H1 of 9.5 µm and 2.5 µm, respectively. The second colored line PL2 had a width W2P and a height H2 of 11.9 µm and 2.3 µm, respectively. The third colored line PL3 had a width W3P and a height H3 of 14.3 µm and 1.7 µm, respectively. The sum of a width WP5B of the fifth colored line PL5B and a width WP5C of the fifth colored line PL5C, that is, a width W5BC was 19.0 µm, and a height H5 thereof was 1.0 µm.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, the fifth colored lines PL5B and PL5C were spaced from each other in the pixel PX and between the pixels PX. Among the contours of the fifth colored lines in the cross-section perpendicular to the Y direction, as shown in Fig. 12, a portion corresponding to the top of the colored line had a convex curved shape.

### <Example 8>

A display 1C described above with reference to Figs. 9 to 13 was produced by the same method as in Example 3, except that the gravure plate was changed. However, in this example, the fifth colored lines PL5B and PL5C were not omitted. The above display 1C was subjected to the same measurement as in Example 1.

As a result, the pixel PX had a square shape with a side length of 48 µm. The first colored line PL1 had a width W1P and a height H1 of 9.5 µm and 2.5 µm, respectively. The second colored line PL2 had a width W2P and a height H2 of 11.9 µm and 2.3 µm, respectively. The third colored line PL3 had a width W3P and a height H3 of 14.3 µm and 1.7 µm, respectively. The sum of a width WP5A of the fifth colored line PL5A, a width WP5B of the fifth colored line PL5B, and a width WP5C of the fifth colored line PL5C, that is, a width W5ABC was 47.8 µm, and a height H5 thereof was 1.1 µm.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, in the pixel PX including the fifth colored line PL5B and at least one of the fifth colored lines PL5A and PL5C, the fifth colored lines adjacent to each other were connected to each other. Among the contours of the fifth colored lines that were not connected to each other in the cross-section perpendicular to the Y direction, as shown in Fig. 12, a portion corresponding to the top of the colored line had a convex curved shape.

### <Example 9>

A display 1C described above with reference to Figs. 9 to 13 was produced by the same method as in Example 3, except that the gravure plate was changed. However, in this example, the fifth colored lines PL5B and PL5C were not omitted. The above display 1C was subjected to the same measurement as in Example 1.

As a result, the pixel PX had a square shape with a side length of 48 µm. The first colored line PL1 had a width W1P and a height H1 of 9.5 µm and 2.5 µm, respectively. The second colored line PL2 had a width W2P and a height H2 of 11.9 µm and 2.3 µm, respectively. The third colored line PL3 had a width W3P and a height H3 of 14.3 µm and 1.7 µm, respectively. The sum of a width WP5A of the fifth colored line PL5A, a width WP5B of the fifth colored line PL5B, and a width WP5C of the fifth colored line PL5C, that is, a width W5ABC was 28.6 µm, and a height H5 thereof was 1.5 µm.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, in the pixel PX including the fifth colored line PL5B and at least one of the fifth colored lines PL5A and PL5C, the fifth colored lines adjacent to each other were spaced from each other. Among the contours of the fifth colored lines in the cross-section perpendicular to the Y direction, as shown in Fig. 12, a portion corresponding to the top of the colored line had a convex curved shape.

### <Example 10>

A display 1D described above with reference to Figs. 14 to 18 was produced. However, in this example, the fifth colored lines PL5A were omitted in all pixels PX.

First, a square film piece with a side length of 200 mm was cut out from a 100 µm-thick white polycarbonate film. This film piece was used as a substrate 10.

Next, first colored lines PL1, second colored lines PL2, third colored lines PL3 and fifth colored lines PL5B and PL5C were formed on the substrate 10 by gravure offset printing. The first colored lines PL1, the second colored lines PL2 and the third colored lines PL3 were formed using cyan ink, magenta ink and yellow ink, respectively. The fifth colored lines PL5B and PL5C were formed using black ink. The above display 1D was subjected to the same measurement as in Example 1.

As a result, the pixel PX had a square shape with a side length of 48 µm. The first colored line PL1 had a width W1P and a height H1 of 9.5 µm and 2.5 µm, respectively. The second colored line PL2 had a width W2P and a height H2 of 11.9 µm and 2.3 µm, respectively. The third colored line PL3 had a width W3P and a height H3 of 14.3 µm and 1.7 µm, respectively. Further, the sum of a width WP5B of the fifth colored line PL5B and a width WP5C of the fifth colored line PL5C, that is, a width W5BC was 31.9 µm, and a height H5 thereof was 0.9 µm.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 15, a portion corresponding to the top of the colored line had a convex curved shape. Further, in the pixel PX including both the fifth colored lines PL5B and PL5C, the fifth colored lines PL5B and PL5C were connected to each other. In the pixel PX including only one of the fifth colored lines PL5B and PL5C, among the contours of the fifth colored lines in the cross-section perpendicular to the Y direction, as shown in Fig. 17, a portion corresponding to the top of the colored line had a convex curved shape.

### <Example 11>

A display 1E described above with reference to Fig. 19 was produced.

First, a square film piece with a side length of 200 mm was cut out from a 125 µm-thick colorless transparent polyethylene terephthalate film. This film piece was used as a substrate 10.

Next, first colored lines PL1, second colored lines PL2, third colored lines PL3, fifth colored lines PL5A to PL5C and sixth colored lines PL6A to PL6C were formed on the substrate 10 by gravure offset printing. The first colored lines PL1, the second colored lines PL2 and the third colored lines PL3 were formed using cyan ink, magenta ink and yellow ink, respectively. The fifth colored lines PL5A to PL5C were formed using black ink. The sixth colored lines PL6A to PL6C were formed using white ink. The above display 1E was subjected to the same measurement as in Example 1.

As a result, the pixel PX had a square shape with a side length of 48 µm. The first colored line PL1 had a width W1P and a height H1 of 9.5 µm and 2.5 µm, respectively. The second colored line PL2 had a width W2P and a height H2 of 11.9 µm and 2.3 µm, respectively. The third colored line PL3 had a width W3P and a height H3 of 14.3 µm and 1.7 µm, respectively. The sum of a width WP5A of the fifth colored line PL5A, a width WP5B of the fifth colored line PL5B, and a width WP5C of the fifth colored line PL5C, that is, a width W5ABC was 28.6 µm, and a height H5 thereof was 1.5 µm. The sum of a width WP6A of the sixth colored line PL6A, a width WP6B of the sixth colored line PL6B, and a width WP6C of the sixth colored line PL6C, that is, a width W6PABC was 47.8 µm, and a height H6 of these sixth colored lines was 3.4 µm.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, a portion corresponding to the top of the colored line had a convex curved shape. Further, in the pixel PX including the fifth colored line PL5B and at least one of the fifth colored lines PL5A and PL5C, the fifth colored lines adjacent to each other were spaced from each other. Among the contours of the fifth colored lines in the cross-section perpendicular to the Y direction, as shown in Fig. 17, a portion corresponding to the top of the colored line had a convex curved shape. Further, in the pixel PX including the sixth colored line PL6B and at least one of the sixth colored lines PL6A and PL6C, the sixth colored lines adjacent to each other were connected to each other. Among the contours of the sixth colored lines that were not connected to each other in the cross-section perpendicular to the Y direction, a portion corresponding to the top of the colored line had a convex curved shape.

### <Example 12>

A display 1A described above with reference to Figs. 6 and 7 was produced by the same method as in Example 1, except that the gravure plate was changed. The above display 1A was subjected to the same measurement as in Example 1.

As a result, the pixel PX had a square shape with a side length of 76 µm. The first colored line PL1 had a width W1P and a height H1 of 20.2 µm and 1.8 µm, respectively. The second colored line PL2 had a width W2P and a height H2 of 18.6 µm and 2.1 µm, respectively. The third colored line PL3 had a width W3P and a height H3 of 23.6 µm and 2.7 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 7, a portion corresponding to the top of each colored line had a convex curved shape.

### <Example 13>

A display 1A described above with reference to Figs. 6 and 7 was produced by the same method as in Example 1, except that the gravure plate was changed. The above display 1A was subjected to the same measurement as in Example 1.

As a result, the pixel PX had a square shape with a side length of 8 µm. The first colored line PL1 had a width W1P and a height H1 of 2.0 µm and 0.6 µm, respectively. The second colored line PL2 had a width W2P and a height H2 of 2.2 µm and 0.4 µm, respectively. The third colored line PL3 had a width W3P and a height H3 of 1.8 µm and 0.5 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 7, a portion corresponding to the top of each colored line had a convex curved shape.

### <Example 14>

A display 1C described above with reference to Figs. 9 to 13 was produced by the same method as in Example 3, except that the gravure plate was changed. However, also in this example, the fifth colored lines PL5B and PL5C were omitted in all pixels PX. The above display 1C was subjected to the same measurement as in Example 1.

As a result, the pixel PX had a square shape with a side length of 8 µm. The first colored line PL1 had a width W1P and a height H1 of 2.0 µm and 0.6 µm, respectively. The second colored line PL2 had a width W2P and a height H2 of 2.2 µm and 0.4 µm, respectively. The third colored line PL3 had a width W3P and a height H3 of 1.8 µm and 0.5 µm, respectively. The fifth colored line PL5A had a width W5A and a height H5A of 2.0 µm and 0.2 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, among the contours of each of the fifth colored lines PL5A in the cross-section perpendicular to the Y direction, as shown in Fig. 12, a portion corresponding to the top of the colored line had a convex curved shape.

### <Example 15>

A display 1C described above with reference to Figs. 9 to 13 was produced by the same method as in Example 3, except that the gravure plate was changed. However, in this example, the fifth colored lines PL5C were not omitted and the fifth colored lines PL5B were omitted in all pixels PX. The above display 1C was subjected to the same measurement as in Example 1.

As a result, the pixel PX had a square shape with a side length of 8 µm. The first colored line PL1 had a width W1P and a height H1 of 2.0 µm and 0.6 µm, respectively. The second colored line PL2 had a width W2P and a height H2 of 2.2 µm and 0.4 µm, respectively. The third colored line PL3 had a width W3P and a height H3 of 1.8 µm and 0.5 µm, respectively. The fifth colored line PL5A had a width W5A and a height H5A of 2.0 µm and 0.2 µm, respectively. The fifth colored line PL5C had a width W5C and a height H5C of 2.0 µm and 0.2 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, among the contours of each of the fifth colored lines PL5A and PL5C in the cross-section perpendicular to the Y direction, as shown in Fig. 12, a portion corresponding to the top of the colored line had a convex curved shape.

### <Example 16>

A display 1C described above with reference to Figs. 9 to 13 was produced by the same method as in Example 3, except that the gravure plate was changed. However, in this example, the fifth colored lines PL5B and PL5C were not omitted and the fifth colored lines PL5A were omitted in all pixels PX. The above display 1C was subjected to the same measurement as in Example 1.

As a result, the pixel PX had a square shape with a side length of 8 µm. The first colored line PL1 had a width W1P and a height H1 of 2.0 µm and 0.6 µm, respectively. The second colored line PL2 had a width W2P and a height H2 of 2.2 µm and 0.4 µm, respectively. The third colored line PL3 had a width W3P and a height H3 of 1.8 µm and 0.5 µm, respectively. The sum of a width WP5B of the fifth colored line PL5B and a width WP5C of the fifth colored line PL5C, that is, a width W5BC was 5.4 µm, and a height H5 thereof was 0.2 µm.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, in the pixel PX including both the fifth colored lines PL5B and PL5C, the fifth colored lines PL5B and PL5C were connected to each other. In the pixel PX including only one of the fifth colored lines PL5B and PL5C, among the contours of the fifth colored lines in the cross-section perpendicular to the Y direction, as shown in Fig. 12, a portion corresponding to the top of the colored line had a convex curved shape.

### <Example 17>

A display 1C described above with reference to Figs. 9 to 13 was produced by the same method as in Example 3, except that the gravure plate was changed. However, in this example, the fifth colored lines PL5B and PL5C were not omitted. The above display 1C was subjected to the same measurement as in Example 1.

As a result, the pixel PX had a square shape with a side length of 8 µm. The first colored line PL1 had a width W1P and a height H1 of 2.0 µm and 0.6 µm, respectively. The second colored line PL2 had a width W2P and a height H2 of 2.2 µm and 0.4 µm, respectively. The third colored line PL3 had a width W3P and a height H3 of 1.8 µm and 0.5 µm, respectively. The sum of a width WP5A of the fifth colored line PL5A, a width WP5B of the fifth colored line PL5B, and a width WP5C of the fifth colored line PL5C, that is, a width W5ABC was 7.8 µm, and a height H5 thereof was 0.2 µm.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, in the pixel PX including the fifth colored line PL5B and at least one of the fifth colored lines PL5A and PL5C, the fifth colored lines adjacent to each other were connected to each other. Among the contours of the fifth colored lines that were not connected to each other in the cross-section perpendicular to the Y direction, as shown in Fig. 12, a portion corresponding to the top of the colored line had a convex curved shape.

### <Example 18>

A display 1D described above with reference to Figs. 14 to 18 was produced. However, in this example, the fifth colored lines PL5A were omitted in all pixels PX.

First, a square film piece with a side length of 200 mm was cut out from a 100 µm-thick white polycarbonate film. This film piece was used as a substrate 10.

Next, first colored lines PL1, second colored lines PL2, third colored lines PL3 and fifth colored lines PL5B and PL5C were formed on the substrate 10 by gravure offset printing. The first colored lines PL1, the second colored lines PL2 and the third colored lines PL3 were formed using cyan ink, magenta ink and yellow ink, respectively. The fifth colored lines PL5B and PL5C were formed using black ink. The above display 1D was subjected to the same measurement as in Example 1.

As a result, the pixel PX had a square shape with a side length of 8 µm. The first colored line PL1 had a width W1P and a height H1 of 2.0 µm and 0.6 µm, respectively. The second colored line PL2 had a width W2P and a height H2 of 2.2 µm and 0.4 µm, respectively. The third colored line PL3 had a width W3P and a height H3 of 1.8 µm and 0.5 µm, respectively. Further, the sum of a width WP5B of the fifth colored line PL5B and a width WP5C of the fifth colored line PL5C, that is, a width W5BC was 5.4 µm, and a height H5 thereof was 0.2 µm.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 15, a portion corresponding to the top of the colored line had a convex curved shape. Further, in the pixel PX including both the fifth colored lines PL5B and PL5C, the fifth colored lines PL5B and PL5C were connected to each other. Among the contours of the fifth colored lines that were not connected to each other in the cross-section perpendicular to the Y direction, as shown in Fig. 17, a portion corresponding to the top of the colored line had a convex curved shape.

### <Example 19>

A display 1E described above with reference to Fig. 19 was produced. However, in this example, the fifth colored lines PL5B and PL5C were omitted.

First, a square film piece with a side length of 200 mm was cut out from a 125 µm-thick colorless transparent polyethylene terephthalate film. This film piece was used as a substrate 10.

Next, first colored lines PL1, second colored lines PL2, third colored lines PL3, fifth colored lines PL5A and sixth colored lines PL6A to PL6C were formed on the substrate 10 by gravure offset printing. The first colored lines PL1, the second colored lines PL2 and the third colored lines PL3 were formed using cyan ink, magenta ink and yellow ink, respectively. The fifth colored lines PL5A were formed using black ink. The sixth colored lines PL6A to PL6C were formed using white ink. The above display 1E was subjected to the same measurement as in Example 1.

As a result, the pixel PX had a square shape with a side length of 8 µm. The first colored line PL1 had a width W1P and a height H1 of 2.0 µm and 0.6 µm, respectively. The second colored line PL2 had a width W2P and a height H2 of 2.2 µm and 0.4 µm, respectively. The third colored line PL3 had a width W3P and a height H3 of 1.8 µm and 0.5 µm, respectively. The fifth colored line PL5A had a width W5A and a height H5A of 2.0 µm and 0.2 µm, respectively. The sum of a width WP6A of the sixth colored line PL6A, a width WP6B of the sixth colored line PL6B, and a width WP6C of the sixth colored line PL6C, that is, a width W6PABC was 7.8 µm, and a height H6 of these sixth colored lines was 0.2 µm.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, a portion corresponding to the top of the colored line had a convex curved shape. Among the contours of the fifth colored lines PL5A in the cross-section perpendicular to the Y direction, a portion corresponding to the top of the colored line had a convex curved shape. Further, in the pixel PX including the sixth colored line PL6B and at least one of the sixth colored lines PL6A and PL6C, the sixth colored lines adjacent to each other were connected to each other. Among the contours of the sixth colored lines that were not connected to each other in the cross-section perpendicular to the Y direction, a portion corresponding to the top of the colored line had a convex curved shape.

### <Example 20>

A display 1A described above with reference to Figs. 6 and 7 was produced by the same method as in Example 1, except that the gravure plate was changed. The above display 1A was subjected to the same measurement as in Example 1.

As a result, the pixel PX had a square shape with a side length of 164 µm. The first colored line PL1 had a width W1P and a height H1 of 56.0 µm and 3.4 µm, respectively. The second colored line PL2 had a width W2P and a height H2 of 43.2 µm and 4.5 µm, respectively. The third colored line PL3 had a width W3P and a height H3 of 52.5 µm and 3.2 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 7, a portion corresponding to the top of each colored line had a convex curved shape.

### <Example 21>

A display 1A described above with reference to Figs. 6 and 7 was produced by the same method as in Example 1, except that the gravure plate was changed. The above display 1A was subjected to the same measurement as in Example 1.

As a result, the pixel PX had a square shape with a side length of 330 µm. The first colored line PL1 had a width W1P and a height H1 of 114.8 µm and 11.6 µm, respectively. The second colored line PL2 had a width W2P and a height H2 of 95.4 µm and 10.3 µm, respectively. The third colored line PL3 had a width W3P and a height H3 of 89.8 µm and 12.0 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 7, a portion corresponding to the top of each colored line had a convex curved shape.

### <Example 22>

A display 1C described above with reference to Figs. 9 to 13 was produced by the same method as in Example 3, except that the gravure plate was changed. However, also in this example, the fifth colored lines PL5B and PL5C were omitted in all pixels PX. The above display 1C was subjected to the same measurement as in Example 1.

As a result, the pixel PX had a square shape with a side length of 330 µm. The first colored line PL1 had a width W1P and a height H1 of 114.8 µm and 11.6 µm, respectively. The second colored line PL2 had a width W2P and a height H2 of 95.4 µm and 10.3 µm, respectively. The third colored line PL3 had a width W3P and a height H3 of 89.8 µm and 12.0 µm, respectively. The fifth colored line PL5A had a width W5A and a height H5A of 100.0 µm and 12.0 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, among the contours of each of the fifth colored lines PL5A in the cross-section perpendicular to the Y direction, as shown in Fig. 12, a portion corresponding to the top of the colored line had a convex curved shape.

### <Example 23>

A display 1C described above with reference to Figs. 9 to 13 was produced by the same method as in Example 3, except that the gravure plate was changed. However, in this example, the fifth colored lines PL5C were not omitted and the fifth colored lines PL5B were omitted in all pixels PX. The above display 1C was subjected to the same measurement as in Example 1.

As a result, the pixel PX had a square shape with a side length of 330 µm. The first colored line PL1 had a width W1P and a height H1 of 114.8 µm and 11.6 µm, respectively. The second colored line PL2 had a width W2P and a height H2 of 95.4 µm and 10.3 µm, respectively. The third colored line PL3 had a width W3P and a height H3 of 89.8 µm and 12.0 µm, respectively. The fifth colored line PL5A had a width W5A and a height H5A of 100.0 µm and 12.0 µm, respectively. The fifth colored line PL5C had a width W5C and a height H5C of 100.0 µm and 12.0 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, among the contours of each of the fifth colored lines PL5A and PL5C in the cross-section perpendicular to the Y direction, as shown in Fig. 12, a portion corresponding to the top of the colored line had a convex curved shape.

### <Example 24>

A display 1C described above with reference to Figs. 9 to 13 was produced by the same method as in Example 3, except that the gravure plate was changed. However, in this example, the fifth colored lines PL5B and PL5C were not omitted and the fifth colored lines PL5A were omitted in all pixels PX. The above display 1C was subjected to the same measurement as in Example 1.

As a result, the pixel PX had a square shape with a side length of 330 µm. The first colored line PL1 had a width W1P and a height H1 of 114.8 µm and 11.6 µm, respectively. The second colored line PL2 had a width W2P and a height H2 of 95.4 µm and 10.3 µm, respectively. The third colored line PL3 had a width W3P and a height H3 of 89.8 µm and 12.0 µm, respectively. The sum of a width WP5B of the fifth colored line PL5B and a width WP5C of the fifth colored line PL5C, that is, a width W5BC was 200.0 µm, and a height H5 thereof was 12.0 µm.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, in the pixel PX including both the fifth colored lines PL5B and PL5C, the fifth colored lines PL5B and PL5C were connected to each other. In the pixel PX including only one of the fifth colored lines PL5B and PL5C, among the contours of the fifth colored lines in the cross-section perpendicular to the Y direction, as shown in Fig. 12, a portion corresponding to the top of the colored line had a convex curved shape.

### <Example 25>

A display 1C described above with reference to Figs. 9 to 13 was produced by the same method as in Example 3, except that the gravure plate was changed. However, in this example, the fifth colored lines PL5B and PL5C were not omitted. The above display 1C was subjected to the same measurement as in Example 1.

As a result, the pixel PX had a square shape with a side length of 330 µm. The first colored line PL1 had a width W1P and a height H1 of 114.8 µm and 11.6 µm, respectively. The second colored line PL2 had a width W2P and a height H2 of 95.4 µm and 10.3 µm, respectively. The third colored line PL3 had a width W3P and a height H3 of 89.8 µm and 12.0 µm, respectively. The sum of a width WP5A of the fifth colored line PL5A, a width WP5B of the fifth colored line PL5B, and a width WP5C of the fifth colored line PL5C, that is, a width W5ABC was 300.0 µm, and a height H5 thereof was 12.0 µm.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 10, a portion corresponding to the top of each colored line had a convex curved shape. Further, in the pixel PX including the fifth colored line PL5B and at least one of the fifth colored lines PL5A and PL5C, the fifth colored lines adjacent to each other were connected to each other. Among the contours of the fifth colored lines that were not connected to each other in the cross-section perpendicular to the Y direction, as shown in Fig. 12, a portion corresponding to the top of the colored line had a convex curved shape.

### <Example 26>

A display 1D described above with reference to Figs. 14 to 18 was produced. However, in this example, the fifth colored lines PL5A were omitted in all pixels PX.

First, a square film piece with a side length of 200 mm was cut out from a 100 µm-thick white polycarbonate film. This film piece was used as a substrate 10.

Next, first colored lines PL1, second colored lines PL2, third colored lines PL3 and fifth colored lines PL5B and PL5C were formed on the substrate 10 by gravure offset printing. The first colored lines PL1, the second colored lines PL2 and the third colored lines PL3 were formed using cyan ink, magenta ink and yellow ink, respectively. The fifth colored lines PL5B and PL5C were formed using black ink. The above display 1D was subjected to the same measurement as in Example 1.

As a result, the pixel PX had a square shape with a side length of 330 µm. The first colored line PL1 had a width W1P and a height H1 of 114.8 µm and 11.6 µm, respectively. The second colored line PL2 had a width W2P and a height H2 of 95.4 µm and 10.3 µm, respectively. The third colored line PL3 had a width W3P and a height H3 of 89.8 µm and 12.0 µm, respectively. Further, the sum of a width WP5B of the fifth colored line PL5B and a width WP5C of the fifth colored line PL5C, that is, a width W5BC was 200.0 µm, and a height H5 thereof was 12.0 µm.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 15, a portion corresponding to the top of the colored line had a convex curved shape. Further, in the pixel PX including both the fifth colored lines PL5B and PL5C, the fifth colored lines PL5B and PL5C were connected to each other. Among the contours of the fifth colored lines that were not connected to each other in the cross-section perpendicular to the Y direction, as shown in Fig. 17, a portion corresponding to the top of the colored line had a convex curved shape.

### <Example 27>

A display 1E described above with reference to Fig. 19 was produced.

First, a square film piece with a side length of 200 mm was cut out from a 125 µm-thick colorless transparent polyethylene terephthalate film. This film piece was used as a substrate 10.

Next, first colored lines PL1, second colored lines PL2, third colored lines PL3, fifth colored lines PL5A to PL5C and sixth colored lines PL6A to PL6C were formed on the substrate 10 by gravure offset printing. The first colored lines PL1, the second colored lines PL2 and the third colored lines PL3 were formed using cyan ink, magenta ink and yellow ink, respectively. The fifth colored lines PL5A to PL5C were formed using black ink. The sixth colored lines PL6A to PL6C were formed using white ink. The above display 1E was subjected to the same measurement as in Example 1.

As a result, the pixel PX had a square shape with a side length of 330 µm. The first colored line PL1 had a width W1P and a height H1 of 114.8 µm and 11.6 µm, respectively. The second colored line PL2 had a width W2P and a height H2 of 95.4 µm and 10.3 µm, respectively. The third colored line PL3 had a width W3P and a height H3 of 89.8 µm and 12.0 µm, respectively. The sum of a width WP5A of the fifth colored line PL5A, a width WP5B of the fifth colored line PL5B, and a width WP5C of the fifth colored line PL5C, that is, a width W5ABC was 300.0 µm, and a height H5 thereof was 12.0 µm. The sum of a width WP6A of the sixth colored line PL6A, a width WP6B of the sixth colored line PL6B, and a width WP6C of the sixth colored line PL6C, that is, a width W6PABC was 300.0 µm, and a height H6 of these sixth colored lines was 12.0 µm.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, a portion corresponding to the top of the colored line had a convex curved shape. Among the contours of the fifth colored lines in the cross-section perpendicular to the Y direction, a portion corresponding to the top of the colored line had a convex curved shape. Further, in the pixel PX including the sixth colored line PL6B and at least one of the sixth colored lines PL6A and PL6C, the sixth colored lines adjacent to each other were connected to each other. Among the contours of the sixth colored lines that were not connected to each other in the cross-section perpendicular to the Y direction, a portion corresponding to the top of the colored line had a convex curved shape.

### <Example 28>

A display 1A described above with reference to Figs. 6 and 7 was produced by the same method as in Example 1, except that the gravure plate was changed. The above display 1A was subjected to the same measurement as in Example 1.

As a result, the pixel PX had a square shape with a side length of 20 µm. The first colored line PL1 had a width W1P and a height H1 of 4.3 µm and 0.2 µm, respectively. The second colored line PL2 had a width W2P and a height H2 of 3.8 µm and 0.8 µm, respectively. The third colored line PL3 had a width W3P and a height H3 of 5.1 µm and 0.7 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 7, a portion corresponding to the top of each colored line had a convex curved shape.

### <Example 29>

A display 1B described above with reference to Fig. 8 was produced by the following method. Here, the display 1B was produced so that the first colored line PL1, the second colored line PL2, the third colored line PL3 and the fourth colored line PL4 adjacent in the Y direction were spaced from each other.

First, a square film piece with a side length of 200 mm was cut out from a 100 µm-thick white polycarbonate film. This film piece was used as a substrate 10.

Next, first colored lines PL1, second colored lines PL2, third colored lines PL3 and fourth colored lines PL4 were formed on the substrate 10 by gravure offset printing. The first colored lines PL1, the second colored lines PL2, the third colored lines PL3 and the fourth colored line were formed using cyan ink, magenta ink, yellow ink and black ink, respectively. The above display 1B was subjected to the same measurement as in Example 1.

As a result, the pixel PX had a square shape with a side length of 54 µm. The first colored line PL1 had a width W1P and a height H1 of 8.6 µm and 0.8 µm, respectively. The second colored line PL2 had a width W2P and a height H2 of 9.3 µm and 0.7 µm, respectively. The third colored line PL3 had a width W3P and a height H3 of 11.2 µm and 0.6 µm, respectively. The fourth colored line PL4 had a width W4P and a height H4 of 10.9 µm and 0.7 µm, respectively.

The first colored line PL1, the second colored line PL2, the third colored line PL3 and the fourth colored line PL4 were spaced from each other in the pixel PX and between the pixels PX. The distances between them in the X direction were substantially equal to each other. The first colored line PL1, the second colored line PL2, the third colored line PL3 and the fourth colored line PL4 included in each pixel PX were respectively spaced from the first colored line PL1, the second colored line PL2, the third colored line PL3 and the fourth colored line PL4 included in other pixel PX adjacent in the Y direction. In addition, as in the other examples, among the contours of each of the first colored line PL1, the second colored line PL2, the third colored line PL3 and the fourth colored line PL4 in the cross-section perpendicular to the Y direction, a portion corresponding to the top of the colored line had a convex curved shape.

### <Example 30>

A display 1B described above with reference to Fig. 8 was produced by the same method as in Example 29, except that the gravure plate was changed. The above display 1B was subjected to the same measurement as in Example 1.

As a result, the pixel PX had a square shape with a side length of 16 µm. The first colored line PL1 had a width W1P and a height H1 of 2.4 µm and 0.2 µm, respectively. The second colored line PL2 had a width W2P and a height H2 of 1.8 µm and 0.4 µm, respectively. The third colored line PL3 had a width W3P and a height H3 of 1.6 µm and 0.4 µm, respectively. The fourth colored line PL4 had a width W4P and a height H4 of 2.2 µm and 0.3 µm, respectively.

The first colored line PL1, the second colored line PL2, the third colored line PL3 and the fourth colored line PL4 were spaced from each other in the pixel PX and between the pixels PX. The distances between them in the X direction were substantially equal to each other. The first colored line PL1, the second colored line PL2, the third colored line PL3 and the fourth colored line PL4 included in each pixel PX were respectively spaced from the first colored line PL1, the second colored line PL2, the third colored line PL3 and the fourth colored line PL4 included in other pixel PX adjacent in the Y direction. In addition, as in the other examples, among the contours of each of the first colored line PL1, the second colored line PL2, the third colored line PL3 and the fourth colored line PL4 in the cross-section perpendicular to the Y direction, a portion corresponding to the top of the colored line had a convex curved shape.

### <Example 31>

A display 1B described above with reference to Fig. 8 was produced by the same method as in Example 29, except that the gravure plate was changed. The above display 1B was subjected to the same measurement as in Example 1.

As a result, the pixel PX had a square shape with a side length of 236 µm. The first colored line PL1 had a width W1P and a height H1 of 56.0 µm and 2.3 µm, respectively. The second colored line PL2 had a width W2P and a height H2 of 43.2 µm and 2.9 µm, respectively. The third colored line PL3 had a width W3P and a height H3 of 52.5 µm and 2.8 µm, respectively. The fourth colored line PL4 had a width W4P and a height H4 of 48.3 µm and 2.4 µm, respectively.

The first colored line PL1, the second colored line PL2, the third colored line PL3 and the fourth colored line PL4 were spaced from each other in the pixel PX and between the pixels PX. The distances between them in the X direction were substantially equal to each other. The first colored line PL1, the second colored line PL2, the third colored line PL3 and the fourth colored line PL4 included in each pixel PX were respectively spaced from the first colored line PL1, the second colored line PL2, the third colored line PL3 and the fourth colored line PL4 included in other pixel PX adjacent in the Y direction. In addition, as in the other examples, among the contours of each of the first colored line PL1, the second colored line PL2, the third colored line PL3 and the fourth colored line PL4 in the cross-section perpendicular to the Y direction, a portion corresponding to the top of the colored line had a convex curved shape.

### <Example 32>

A display 1B described above with reference to Fig. 8 was produced by the same method as in Example 29, except that the gravure plate was changed. The above display 1B was subjected to the same measurement as in Example 1.

As a result, the pixel PX had a square shape with a side length of 440 µm. The first colored line PL1 had a width W1P and a height H1 of 116.3 µm and 11.7 µm, respectively. The second colored line PL2 had a width W2P and a height H2 of 85.0 µm and 10.3 µm, respectively. The third colored line PL3 had a width W3P and a height H3 of 95.0 µm and 10.4 µm, respectively. The fourth colored line PL4 had a width W4P and a height H4 of 103.8 µm and 12.0 µm, respectively.

The first colored line PL1, the second colored line PL2, the third colored line PL3 and the fourth colored line PL4 were spaced from each other in the pixel PX and between the pixels PX. The distances between them in the X direction were substantially equal to each other. The first colored line PL1, the second colored line PL2, the third colored line PL3 and the fourth colored line PL4 included in each pixel PX were respectively spaced from the first colored line PL1, the second colored line PL2, the third colored line PL3 and the fourth colored line PL4 included in other pixel PX adjacent in the Y direction. In addition, as in the other examples, among the contours of each of the first colored line PL1, the second colored line PL2, the third colored line PL3 and the fourth colored line PL4 in the cross-section perpendicular to the Y direction, a portion corresponding to the top of the colored line had a convex curved shape.

### <Example 33>

A display 1A described above with reference to Figs. 6 and 7 was produced by the same method as in Example 1, except that the gravure plate was changed. The above display 1A was subjected to the same measurement as in Example 1.

As a result, the pixel PX had a square shape with a side length of 6 µm. The first colored line PL1 had a width W1P and a height H1 of 1.3 µm and 0.3 µm, respectively. The second colored line PL2 had a width W2P and a height H2 of 2.2 µm and 0.1 µm, respectively. The third colored line PL3 had a width W3P and a height H3 of 1.8 µm and 0.1 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 7, a portion corresponding to the top of each colored line had a convex curved shape.

### <Example 34>

A display 1A described above with reference to Figs. 6 and 7 was produced by the same method as in Example 1, except that the gravure plate was changed. The above display 1A was subjected to the same measurement as in Example 1.

As a result, the pixel PX had a square shape with a side length of 106 µm. The first colored line PL1 had a width W1P and a height H1 of 30.6 µm and 1.8 µm, respectively. The second colored line PL2 had a width W2P and a height H2 of 42.1 µm and 1.5 µm, respectively. The third colored line PL3 had a width W3P and a height H3 of 20.3 µm and 2.8 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. In addition, among the contours of each of the first colored line PL1, the second colored line PL2 and the third colored line PL3 in the cross-section perpendicular to the Y direction, as shown in Fig. 7, a portion corresponding to the top of each colored line had a convex curved shape.

### <Example 35>

A display 1B described above with reference to Fig. 8 was produced by the same method as in Example 29, except that the gravure plate was changed. The above display 1B was subjected to the same measurement as in Example 1.

As a result, the pixel PX had a square shape with a side length of 172 µm. The first colored line PL1 had a width W1P and a height H1 of 39.0 µm and 0.7 µm, respectively. The second colored line PL2 had a width W2P and a height H2 of 27.0 µm and 1.9 µm, respectively. The third colored line PL3 had a width W3P and a height H3 of 45.0 µm and 1.7 µm, respectively. The fourth colored line PL4 had a width W4P and a height H4 of 24.2 µm and 3.4 µm, respectively.

The first colored line PL1, the second colored line PL2, the third colored line PL3 and the fourth colored line PL4 were spaced from each other in the pixel PX and between the pixels PX. The distances between them in the X direction were substantially equal to each other. The first colored line PL1, the second colored line PL2, the third colored line PL3 and the fourth colored line PL4 included in each pixel PX were respectively spaced from the first colored line PL1, the second colored line PL2, the third colored line PL3 and the fourth colored line PL4 included in other pixel PX adjacent in the Y direction. In addition, as in the other examples, among the contours of each of the first colored line PL1, the second colored line PL2, the third colored line PL3 and the fourth colored line PL4 in the cross-section perpendicular to the Y direction, a portion corresponding to the top of the colored line had a convex curved shape.

### <Example 36>

A display 1B described above with reference to Fig. 8 was produced by the same method as in Example 29, except that the gravure plate was changed. The above display 1B was subjected to the same measurement as in Example 1.

As a result, the pixel PX had a square shape with a side length of 14 µm. The first colored line PL1 had a width W1P and a height H1 of 1.2 µm and 0.1 µm, respectively. The second colored line PL2 had a width W2P and a height H2 of 1.5 µm and 0.1 µm, respectively. The third colored line PL3 had a width W3P and a height H3 of 1.4 µm and 0.1 µm, respectively. The fourth colored line PL4 had a width W4P and a height H4 of 1.8 µm and 0.1 µm, respectively.

The first colored line PL1, the second colored line PL2, the third colored line PL3 and the fourth colored line PL4 were spaced from each other in the pixel PX and between the pixels PX. The distances between them in the X direction were substantially equal to each other. The first colored line PL1, the second colored line PL2, the third colored line PL3 and the fourth colored line PL4 included in each pixel PX were respectively spaced from the first colored line PL1, the second colored line PL2, the third colored line PL3 and the fourth colored line PL4 included in other pixel PX adjacent in the Y direction. In addition, as in the other examples, among the contours of each of the first colored line PL1, the second colored line PL2, the third colored line PL3 and the fourth colored line PL4 in the cross-section perpendicular to the Y direction, a portion corresponding to the top of the colored line had a convex curved shape.

### <Comparative Example 1>

A display similar to the display 1A described above with reference to Figs. 6 and 7 was produced by the same method as in Example 1, except that the gravure plate was changed. The above display was subjected to the same measurement as in Example 1.

As a result, the pixel PX had a square shape with a side length of 628 µm. The first colored line PL1 had a width W1P and a height H1 of 196.0 µm and 14.9 µm, respectively. The second colored line PL2 had a width W2P and a height H2 of 165.4 µm and 9.4 µm, respectively. The third colored line PL3 had a width W3P and a height H3 of 120.3 µm and 6.4 µm, respectively.

The first colored line PL1, the second colored line PL2 and the third colored line PL3 were spaced from each other in the pixel PX and between the pixels PX. The distances between them in the X direction were substantially equal to each other. The first colored line PL1, the second colored line PL2 and the third colored line PL3 included in each pixel PX were respectively spaced from the first colored line PL1, the second colored line PL2 and the third colored line PL3 included in other pixel PX adjacent in the Y direction. Among the contours of each of the first colored line PL1, the second colored line PL2 and the third colored line PL3 in the cross-section perpendicular to the Y direction, a portion corresponding to the top of the colored line was convex, but not curved as shown in Fig. 7. Specifically, as shown in Fig. 4, the above portion was curved at both ends and straight therebetween.

### <Comparative Example 2>

A display similar to the display 1B described above with reference to Fig. 8 was produced by the same method as in Example 29, except that the gravure plate was changed. The above display was subjected to the same measurement as in Example 1.

As a result, the pixel PX had a square shape with a side length of 498 µm. The first colored line PL1 had a width W1P and a height H1 of 118.5 µm and 14.0 µm, respectively. The second colored line PL2 had a width W2P and a height H2 of 134.2 µm and 13.3 µm, respectively. The third colored line PL3 had a width W3P and a height H3 of 104.5 µm and 15.8 µm, respectively. The fourth colored line PL4 had a width W4P and a height H4 of 105.0 µm and 12.5 µm, respectively.

The first colored line PL1, the second colored line PL2, the third colored line PL3 and the fourth colored line PL4 were spaced from each other in the pixel PX and between the pixels PX. The distances between them in the X direction were substantially equal to each other. The first colored line PL1, the second colored line PL2, the third colored line PL3 and the fourth colored line PL4 included in each pixel PX were respectively spaced from the first colored line PL1, the second colored line PL2, the third colored line PL3 and the fourth colored line PL4 included in other pixel PX adjacent in the Y direction. Among the contours of each of the first colored line PL1, the second colored line PL2, the third colored line PL3 and the fourth colored line PL4 in the cross-section perpendicular to the Y direction, a portion corresponding to the top of the colored line was convex, but not curved as shown in Fig. 7. Specifically, as shown in Fig. 4, the above portion was curved at both ends and straight therebetween.

### <Comparative Example 3>

A display similar to the display 1B described above with reference to Fig. 8 was produced by the same method as in Example 29, except that the gravure plate was changed. The above display was subjected to the same measurement as in Example 1.

As a result, the pixel PX had a square shape with a side length of 960 µm. The first colored line PL1 had a width W1P and a height H1 of 185.0 µm and 18.0 µm, respectively. The second colored line PL2 had a width W2P and a height H2 of 253.0 µm and 21.2 µm, respectively. The third colored line PL3 had a width W3P and a height H3 of 223.0 µm and 17.5 µm, respectively. The fourth colored line PL4 had a width W4P and a height H4 of 286.0 µm and 15.0 µm, respectively.

The first colored line PL1, the second colored line PL2, the third colored line PL3 and the fourth colored line PL4 were spaced from each other in the pixel PX and between the pixels PX. The distances between them in the X direction were substantially equal to each other. The first colored line PL1, the second colored line PL2, the third colored line PL3 and the fourth colored line PL4 included in each pixel PX were respectively spaced from the first colored line PL1, the second colored line PL2, the third colored line PL3 and the fourth colored line PL4 included in other pixel PX adjacent in the Y direction. Among the contours of each of the first colored line PL1, the second colored line PL2, the third colored line PL3 and the fourth colored line PL4 in the cross-section perpendicular to the Y direction, a portion corresponding to the top of the colored line was convex, but not curved as shown in Fig. 7. Specifically, as shown in Fig. 4, the above portion was curved at both ends and straight therebetween.

### <Comparative Example 4>

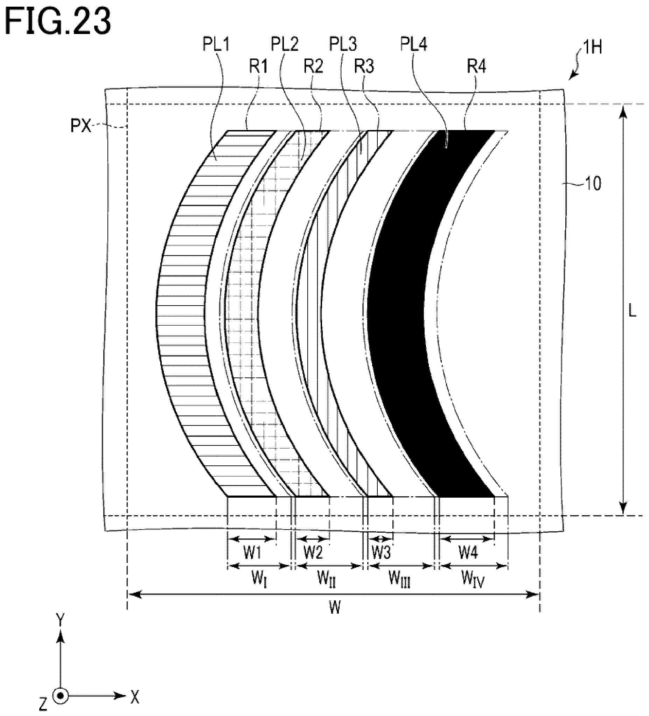

Fig. 23 is an enlarged plan view of a part of a display according to Comparative Example 4. A display 1H shown in Fig. 23 is the same as the display 1B described above with reference to Fig. 8, except that the following configuration was employed. That is, in the display 1H shown in Fig. 23, each of the first region R1, the second region R2, the third region R3 and the fourth region R4 had an arc shape, and thus each of the first colored line PL1, the second colored line PL2, the third colored line PL3 and the fourth colored line PL4 had an arc shape. The first region R1, the second region R2, the third region R3 and the fourth region R4 were identical in the shape and dimensions of the arc shape in the outline. Further, in the display 1H, the width of the colored lines, instead of the length of the colored lines, was varied to display a gradation display image.

In this comparative example, the display 1H described above with reference to Fig. 23 was produced by the same method as in Example 29, except that the gravure plate was changed. The above display 1H was subjected to the same measurement as in Example 1.

As a result, the pixel PX had a square shape with a side length of 560 µm. A width W_{I} of the first region R1, a width W_{II} of the second region R2, a width W_{III} of the third region R3 and a width Wiv of the fourth region R4 were each 80 µm. The first region R1, the second region R2, the third region R3 and the fourth region R4 were spaced from each other. The first colored line PL1 had an average width W1P and an average height H1 of 64.1 µm and 3.1 µm, respectively. The second colored line PL2 had an average width W2P and an average height H2 of 38.3 µm and 1.6 µm, respectively. The third colored line PL3 had an average width W3P and an average height H3 of 28.2 µm and 1.8 µm, respectively. The fourth colored line PL4 had an average width W4P and an average height H4 of 70.7 µm and 4.3 µm, respectively.

The first colored line PL1, the second colored line PL2, the third colored line PL3 and the fourth colored line PL4 included in each pixel PX were respectively spaced from the first colored line PL1, the second colored line PL2, the third colored line PL3 and the fourth colored line PL4 included in other pixel PX adjacent in the Y direction. In addition, as in the other examples, among the contours of each of the first colored line PL1, the second colored line PL2, the third colored line PL3 and the fourth colored line PL4 in the cross-section perpendicular to the Y direction, a portion corresponding to the top of the colored line had a convex curved shape.

### <Comparative Example 5>

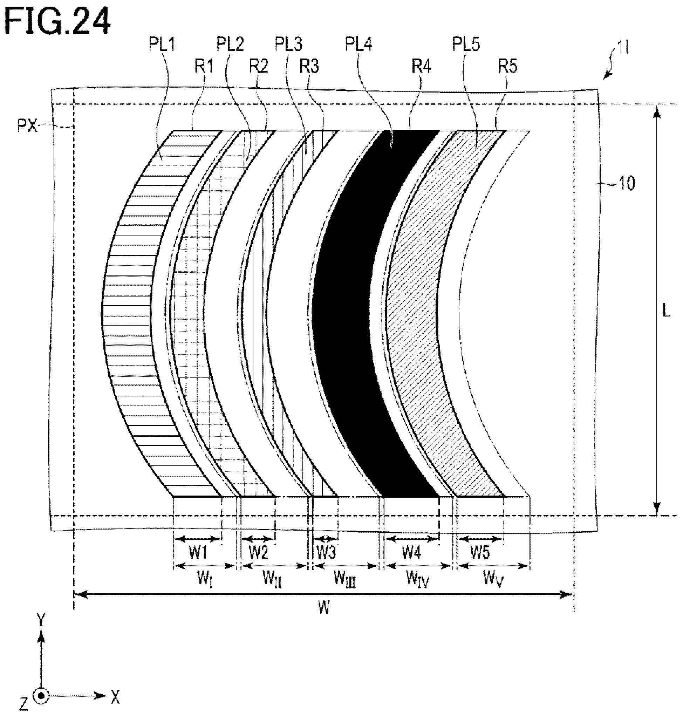

Fig. 24 is an enlarged plan view of a part of a display according to Comparative Example 5. A display 1I shown in Fig. 24 is the same as the display 1H described above with reference to Fig. 23, except that the following configuration was employed. That is, in the display 1I shown in Fig. 24, the pixel PX further included a fifth region R5 having an arc shape, and the fifth region R5 in one or more pixels PX included a fifth colored line PL5 having an arc shape. The first region R1, the second region R2, the third region R3, the fourth region R4 and the fifth region R5 were identical in the shape and dimensions of the arc shape in the outline. Further, in the display 1I, as in the display 1H, the width of the colored lines, instead of the length of the colored lines, was varied to display a gradation display image.

In this comparative example, the display 1I described above with reference to Fig. 24 was produced by the same method as in Comparative Example 4, except that the gravure plate was changed. The above display 1I was subjected to the same measurement as in Example 1.

As a result, the pixel PX had a square shape with a side length of 640 µm. A width W_{I} of the first region R1, a width W_{II} of the second region R2, a width W_{III} of the third region R3, a width Wiv of the fourth region R4 and a width Wv of the fifth region R5 were each 80 µm. The first region R1, the second region R2, the third region R3, the fourth region R4 and the fifth region R5 were spaced from each other. The first colored line PL1 had an average width W1P and an average height H1 of 64.1 µm and 3.1 µm, respectively. The second colored line PL2 had an average width W2P and an average height H2 of 38.3 µm and 1.6 µm, respectively. The third colored line PL3 had an average width W3P and an average height H3 of 28.2 µm and 1.8 µm, respectively. The fourth colored line PL4 had an average width W4P and an average height H4 of 70.7 µm and 4.3 µm, respectively. The fifth colored line PL5 had an average width W5 and an average height H5 of 61.3 µm and 3.7 µm, respectively.

The first colored line PL1, the second colored line PL2, the third colored line PL3, the fourth colored line PL4 and the fifth colored line PL5 included in each pixel PX were respectively spaced from the first colored line PL1, the second colored line PL2, the third colored line PL3, the fourth colored line PL4 and the fifth colored line PL5 included in other pixel PX adjacent in the Y direction. In addition, as in the other examples, among the contours of each of the first colored line PL1, the second colored line PL2, the third colored line PL3, the fourth colored line PL4 and the fifth colored line PL5 in the cross-section perpendicular to the Y direction, a portion corresponding to the top of the colored line had a convex curved shape.

### <Comparative Example 6>

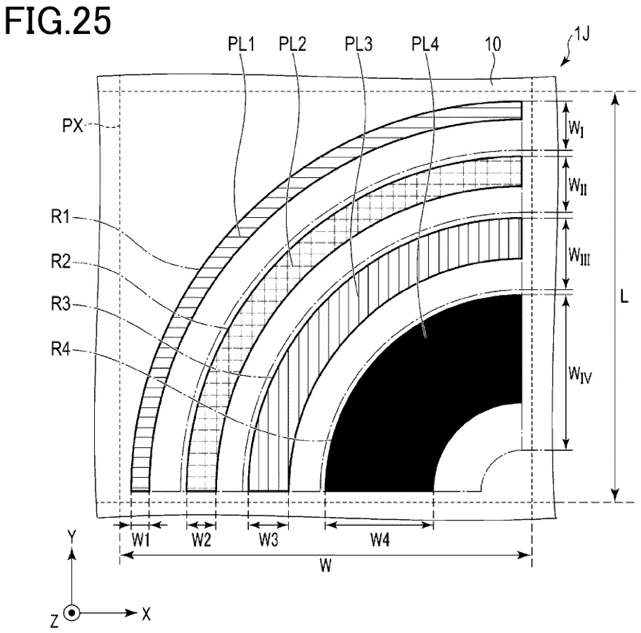

Fig. 25 is an enlarged plan view of a part of a display according to Comparative Example 6. A display 1J shown in Fig. 25 is the same as the display 1B described above with reference to Fig. 8, except that the following configuration was employed. That is, in the display 1J shown in Fig. 25, each of the first region R1, the second region R2, the third region R3 and the fourth region R4 had an arc shape, and thus each of the first colored line PL1, the second colored line PL2, the third colored line PL3 and the fourth colored line PL4 had an arc shape. The arc shaped portions in the outlines of the first region R1, the second region R2, the third region R3 and the fourth region R4 were part of concentric circles. Further, in the display 1J, the width of the colored lines, instead of the length of the colored lines, was varied to display a gradation display image.

In this comparative example, the display 1J described above with reference to Fig. 25 was produced by the same method as in Example 29, except that the gravure plate was changed. The above display 1J was subjected to the same measurement as in Example 1.

As a result, the pixel PX had a square shape with a side length of 443 µm. A width W_{I} of the first region R1, a width W_{II} of the second region R2, a width W_{III} of the third region R3 and a width Wiv of the fourth region R4 were 64 µm, 74 µm, 93 µm and 193 µm, respectively. The first colored line PL1 had an average width W1P and an average height H1 of 24.5 µm and 1.9 µm, respectively. The second colored line PL2 had an average width W2P and an average height H2 of 35.2 µm and 2.2 µm, respectively. The third colored line PL3 had an average width W3P and an average height H3 of 54.6 µm and 3.4 µm, respectively. The fourth colored line PL4 had an average width W4P and an average height H4 of 150.8 µm and 7.3 µm, respectively.

The first colored line PL1, the second colored line PL2, the third colored line PL3 and the fourth colored line PL4 included in each pixel PX were respectively spaced from the first colored line PL1, the second colored line PL2, the third colored line PL3 and the fourth colored line PL4 included in other pixel PX adjacent in the Y direction. In addition, as in the other examples, among the contours of each of the first colored line PL1, the second colored line PL2, the third colored line PL3 and the fourth colored line PL4 in the cross-section perpendicular to the Y direction, a portion corresponding to the top of the colored line had a convex curved shape.

### <Comparative Example 7>

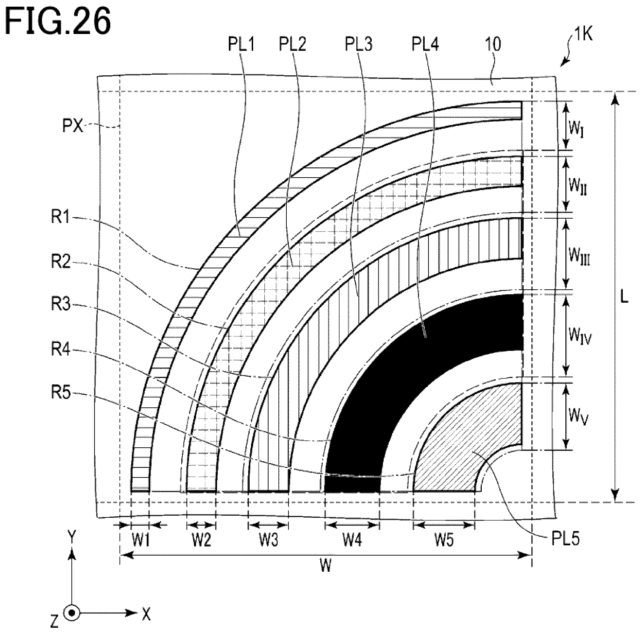

Fig. 26 is an enlarged plan view of a part of a display according to Comparative Example 7. A display 1K shown in Fig. 26 is the same as the display 1J described above with reference to Fig. 25, except that the following configuration was employed. That is, in the display 1K shown in Fig. 26, the pixel PX further included a fifth region R5 having an arc shape, and the fifth region R5 in one or more pixels PX included a fifth colored line PL5 having an arc shape. The arc shaped portions in the outlines of the first region R1, the second region R2, the third region R3, the fourth region R4 and the fifth region R5 were part of concentric circles. Further, in the display 1K, as in the display 1J, the width of the colored lines, instead of the length of the colored lines, was varied to display a gradation display image.

In this comparative example, the display 1K described above with reference to Fig. 26 was produced by the same method as in Comparative Example 6, except that the gravure plate was changed. The above display 1K was subjected to the same measurement as in Example 1.

As a result, the pixel PX had a square shape with a side length of 443 µm. A width W_{I} of the first region R1, a width W_{II} of the second region R2, a width W_{III} of the third region R3, a width Wiv of the fourth region R4 and a width Wv of the fifth region R5 were 54 µm, 64 µm, 78 µm, 92 µm and 125 µm, respectively. The first colored line PL1 had an average width W1P and an average height H1 of 24.5 µm and 1.3 µm, respectively. The second colored line PL2 had an average width W2P and an average height H2 of 35.2 µm and 2.2 µm, respectively. The third colored line PL3 had an average width W3P and an average height H3 of 54.6 µm and 3.4 µm, respectively. The fourth colored line PL4 had an average width W4P and an average height H4 of 150.8 µm and 7.3 µm, respectively. The fifth colored line PL5 had an average width W5 and an average height H5 of 81.4 µm and 10.4 µm, respectively.

The first colored line PL1, the second colored line PL2, the third colored line PL3, the fourth colored line PL4 and the fifth colored line PL5 included in each pixel PX were respectively spaced from the first colored line PL1, the second colored line PL2, the third colored line PL3, the fourth colored line PL4 and the fifth colored line PL5 included in other pixel PX adjacent in the Y direction. In addition, as in the other examples, among the contours of each of the first colored line PL1, the second colored line PL2, the third colored line PL3, the fourth colored line PL4 and the fifth colored line PL5 in the cross-section perpendicular to the Y direction, a portion corresponding to the top of the colored line had a convex curved shape.

### <Evaluations>

The following evaluation was performed for the image quality of images displayed by the displays of Examples 1 to 36 and Comparative Examples 1 to 7. That is, each display was placed under a white light source, and observed in a direction perpendicular to a major surface of the substrate from a position 30 cm away from the print surface. When each pixel was indistinguishable from other pixels, that is, when the square shapes of the respective pixels were unrecognizable, it was determined as "A", and when a pixel was distinguishable from other pixels, it was determined as "C".

Then, the following evaluation was performed for the changes in glossiness. That is, each display was observed while changing the observation direction within the angular range of approximately ±80° in a plane perpendicular to the Y direction, with the direction perpendicular to the major surface of the substrate taken as 0°. When the glossiness changed as the angle changed from 0°, it was determined as "A", and when no such change occurred, it was determined as "B".

Next, the following evaluation was performed for the anti-counterfeiting effect. That is, each display was copied using a color copy function of a digital full color multifunction copier IM C4500 manufactured by Ricoh Company, Ltd. When the copied article had changes in the image due to image unevenness or a decrease in sharpness, it was determined as "A", and when there was no change in the image, it was determined as "C".

Further, based on the above determination results, an overall evaluation was made. Specifically, when all the evaluations regarding the image quality, changes in glossiness and anti-counterfeiting effect were "A", the overall evaluation was "AA". When the evaluation regarding the image quality and anti-counterfeiting effect was "A", but the evaluation regarding the changes in glossiness was "B", the overall evaluation was "A". When the evaluation regarding the anti-counterfeiting effect was "A", but both the evaluation regarding the changes in glossiness and the evaluation regarding the image quality were "C", the overall evaluation was "C". When the evaluation regarding the changes in glossiness was "A", but the evaluation regarding the image quality and anti-counterfeiting effect was "C", the overall evaluation was "D". When the evaluation regarding the changes in glossiness was "B", but the evaluation regarding the image quality and anti-counterfeiting effect was "C", the overall evaluation was "E".

The tables below show the above evaluation results along with various parameters. In the tables below, "W_{AV}" represents the arithmetic mean W_{AV}1 of the widths W1, W2 and W3, and the arithmetic mean W_{AV}2 of the widths W1, W2, W3 and W4. The widths W 1, W2, W3 and W4 are equal to the widths W1P, W2P, W3P and W4P, respectively.

"ΔW1" represents the difference between the width W1 and the arithmetic mean W_{AV}. "ΔW2" represents the difference between the width W2 and the arithmetic mean W_{AV}. "ΔW3" represents the difference between the width W3 and the arithmetic mean W_{AV}. "ΔW4" represents the difference between the width W4 and the arithmetic mean W_{AV}.

"ΔW5A" represents the difference between the width W5A and the arithmetic mean W_{AV}. "ΔW5BC" represents the difference between a half of the width W5BC and the arithmetic mean W_{AV}. "ΔW5ABC" represents the difference between one-third of the width W5ABC and the arithmetic mean Wav. "ΔW6ABC" represents the difference between one-third of the width W6ABC and the arithmetic mean Wav.

**[Table 1]**

| | First to fifth regions | First colored line | | | Second colored line | | | Third colored line | | | Fourth colored line | | |
|---|---|---|---|---|---|---|---|---|---|---|---|---|---|
| | | W1 (µm) | H1 (µm) | ΔW1 /Wav | W2 (µm) | H2 (µm) | ΔW2 /Wav | Width W3 (µm) | Height H3 (µm) | ΔW3 /Wav | Width W4 (µm) | Height H4 (µm) | ΔW4 /Wav |
| Ex.1 | Linear | 9.6 | 0.8 | -4.0% | 9.2 | 0.7 | -8.0% | 11.2 | 0.6 | 12.0% | - | - | - |
| Ex.2 | Linear | 9.5 | 2.5 | -20.0% | 11.9 | 2.3 | 0.1% | 14.3 | 1.7 | 20.0% | - | - | - |
| Ex.3 | Linear | 9.5 | 2.5 | -20.0% | 11.9 | 2.3 | 0.1% | 14.3 | 1.7 | 20.0% | - | - | - |
| Ex.4 | Linear | 9.5 | 2.5 | -20.0% | 11.9 | 2.3 | 0.1% | 14.3 | 1.7 | 20.0% | - | - | - |
| Ex.5 | Linear | 9.5 | 2.5 | -20.0% | 11.9 | 2.3 | 0.1% | 14.3 | 1.7 | 20.0% | - | - | - |
| Ex.6 | Linear | 9.5 | 2.5 | -20.0% | 11.9 | 2.3 | 0.1% | 14.3 | 1.7 | 20.0% | - | - | - |
| Ex.7 | Linear | 9.5 | 2.5 | -20.0% | 11.9 | 2.3 | 0.1% | 14.3 | 1.7 | 20.0% | - | - | - |
| Ex. 8 | Linear | 9.5 | 2.5 | -20.0% | 11.9 | 2.3 | 0.1% | 14.3 | 1.7 | 20.0% | - | - | - |
| Ex.9 | Linear | 9.5 | 2.5 | -20.0% | 11.9 | 2.3 | 0.1% | 14.3 | 1.7 | 20.0% | - | - | - |
| Ex.10 | Linear | 9.5 | 2.5 | -20.0% | 11.9 | 2.3 | 0.1% | 14.3 | 1.7 | 20.0% | - | - | - |
| Ex.11 | Linear | 9.5 | 2.5 | -20.0% | 11.9 | 2.3 | 0.1% | 14.3 | 1.7 | 20.0% | - | - | - |
| Ex.12 | Linear | 20.2 | 1.8 | -2.9% | 18.6 | 2.1 | -10.6% | 23.6 | 2.7 | 13.5% | - | - | - |
| Ex.13 | Linear | 2.0 | 0.6 | 0% | 2.2 | 0.4 | 10.0% | 1.8 | 0.5 | -10.0% | - | - | - |
| Ex.14 | Linear | 2.0 | 0.6 | 0% | 2.2 | 0.4 | 10.0% | 1.8 | 0.5 | -10.0% | - | - | - |
| Ex.15 | Linear | 2.0 | 0.6 | 0% | 2.2 | 0.4 | 10.0% | 1.8 | 0.5 | -10.0% | - | - | - |

**[Table 2]**

| | First to fifth regions | Fifth colored line (PLSA) | | | Fifth colored line (PL5A+ PL5C) | | | | | | Fifth colored line (PLSB+ PL5C) | | | Fifth colored line (PL5A+PL5B+ PL5C) | | | Sixth colored line (PL6A+PL6B+ PL6C) | | |
|---|---|---|---|---|---|---|---|---|---|---|---|---|---|---|---|---|---|---|---|
| | | W5_{A} (µm) | H5_{A} (µm) | ΔW5_{A} /Wav | W5_{A} (µm) | H5_{A} (µm) | W5_{C} (µm) | H5_{C} (µm) | ΔW5_{A} /Wav | ΔW5_{C} /Wav | W5_{BC} (µm) | H5 (µm) | ΔW5_{BC} /Wav | W5_{ABC} (µm) | H5 (µm) | ΔW5_{ABC} /Wav | W6_{ABC} (µm) | H6 (µm) | ΔW6_{ABC} /Wav |
| Ex.1 | Linear | | | | | | | | | | | | | | | | | | |
| Ex.2 | Linear | | | | | | | | | | | | | | | | | | |
| Ex.3 | Linear | 9.5 | 0.7 | -20.0% | | | | | | | | | | | | | | | |
| Ex.4 | Linear | 14.3 | 0.8 | 20.0% | | | | | | | | | | | | | | | |
| Ex.5 | Linear | | | | 9.5 | 2.4 | 14.3 | 1.6 | -20.0% | 20.0% | | | | | | | | | |
| Ex.6 | Linear | | | | | | | | | | 31.9 | 0.9 | 34.0% | | | | | | |
| Ex.7 | Linear | | | | | | | | | | 19.0 | 1.0 | -20.0% | | | | | | |
| Ex.8 | Linear | | | | | | | | | | | | | 47.8 | 1.1 | 34.0% | | | |
| Ex.9 | Linear | | | | | | | | | | | | | 28.6 | 1.5 | -20.0% | | | |
| Ex.10 | Linear | | | | | | | | | | 31.9 | 0.9 | 34.0% | | | | 48.0 | - | - |
| Ex.11 | Linear | | | | | | | | | | | | | 28.6 | 1.5 | -20.0% | 47.8 | 3.4 | 34.0% |
| Ex.12 | Linear | | | | | | | | | | | | | | | | | | |
| Ex.13 | Linear | | | | | | | | | | | | | | | | | | |
| Ex.14 | Linear | 2.0 | 0.2 | 0.0% | | | | | | | | | | | | | | | |
| Ex.15 | Linear | | | | 2.0 | 0.2 | 2.0 | 0.2 | 0.0% | 0.0% | | | | | | | | | |

**[Table 3]**

| | First to fifth regions | Pixel size (µm) | Evaluation | | | |
|---|---|---|---|---|---|---|
| | | | Image quality | Changes in glossiness | Anti-counterfeiting effect | Overall evaluation |
| Ex.1 | Linear | 36 | A | A | A | AA |
| Ex.2 | Linear | 48 | A | A | A | AA |
| Ex.3 | Linear | 48 | A | A | A | AA |
| Ex.4 | Linear | 48 | A | A | A | AA |
| Ex.5 | Linear | 48 | A | A | A | AA |
| Ex.6 | Linear | 48 | A | A | A | AA |
| Ex.7 | Linear | 48 | A | A | A | AA |
| Ex.8 | Linear | 48 | A | A | A | AA |
| Ex.9 | Linear | 48 | A | A | A | AA |
| Ex.10 | Linear | 48 | A | A | A | AA |
| Ex.11 | Linear | 48 | A | A | A | AA |
| Ex.12 | Linear | 76 | A | A | A | AA |
| Ex.13 | Linear | 8 | A | A | A | AA |
| Ex.14 | Linear | 8 | A | A | A | AA |
| Ex.15 | Linear | 8 | A | A | A | AA |

**[Table 4]**

| | First to fifth regions | First colored line | | | Second colored line | | | Third colored line | | | Fourth colored line | | |
|---|---|---|---|---|---|---|---|---|---|---|---|---|---|
| | | W1 (µm) | H1 (µm) | ΔW1 /Wav | W2 (µm) | H2 (µm) | ΔW2 /Wav | Width W3 (µm) | Height H3 (µm) | ΔW3 /Wav | Width W4 (µm) | Height H4 (µm) | ΔW4 /Wav |
| Ex.16 | Linear | 2.0 | 0.6 | 0% | 2.2 | 0.4 | 10.0% | 1.8 | 0.5 | -10.0% | - | - | - |
| Ex.17 | Linear | 2.0 | 0.6 | 0% | 2.2 | 0.4 | 10.0% | 1.8 | 0.5 | -10.0% | - | - | - |
| Ex.18 | Linear | 2.0 | 0.6 | 0% | 2.2 | 0.4 | 10.0% | 1.8 | 0.5 | -10.0% | - | - | - |
| Ex.19 | Linear | 2.0 | 0.6 | 0% | 2.2 | 0.4 | 10.0% | 1.8 | 0.5 | -10.0% | - | - | - |
| Ex.20 | Linear | 56.0 | 3.4 | 10.7% | 43.2 | 4.5 | -14.6% | 52.5 | 3.2 | 3.8% | - | - | - |
| Ex.21 | Linear | 114.8 | 11.6 | 14.8% | 95.4 | 10.3 | -4.6% | 89.8 | 12.0 | -10.2% | - | - | - |
| Ex.22 | Linear | 114.8 | 11.6 | 14.8% | 95.4 | 10.3 | -4.6% | 89.8 | 12.0 | -10.2% | - | - | - |
| Ex.23 | Linear | 114.8 | 11.6 | 14.8% | 95.4 | 10.3 | -4.6% | 89.8 | 12.0 | -10.2% | - | - | - |
| Ex.24 | Linear | 114.8 | 11.6 | 14.8% | 95.4 | 10.3 | -4.6% | 89.8 | 12.0 | -10.2% | - | - | - |
| Ex.25 | Linear | 114.8 | 11.6 | 14.8% | 95.4 | 10.3 | -4.6% | 89.8 | 12.0 | -10.2% | - | - | - |
| Ex.26 | Linear | 114.8 | 11.6 | 14.8% | 95.4 | 10.3 | -4.6% | 89.8 | 12.0 | -10.2% | - | - | - |
| Ex.27 | Linear | 114.8 | 11.6 | 14.8% | 95.4 | 10.3 | -4.6% | 89.8 | 12.0 | -10.2% | - | - | - |
| Ex.28 | Linear | 4.3 | 0.2 | -2.3% | 3.8 | 0.8 | -13.6% | 5.1 | 0.7 | 15.9% | - | - | - |
| Ex.29 | Linear | 8.6 | 0.8 | -14.0% | 9.3 | 0.7 | -7.0% | 11.2 | 0.6 | 12.0% | 10.9 | 0.7 | 9.0% |
| Ex.30 | Linear | 2.4 | 0.2 | 20.0% | 1.8 | 0.4 | -10.0% | 1.6 | 0.4 | -20.0% | 2.2 | 0.3 | 10.0% |

**[Table 5]**

| | First to fifth regions | Fifth colored line (PL5A) | | | Fifth colored line (PL5A+ PL5C) | | | | | | Fifth colored line (PLSB+ PL5C) | | | Fifth colored line (PL5A+PL5B+ PL5C) | | | Sixth colored line (PL6A+PL6B+ PL6C) | | |
|---|---|---|---|---|---|---|---|---|---|---|---|---|---|---|---|---|---|---|---|
| | | W5_{A} (µm) | H5_{A} (µm) | ΔW5_{A} /Wav | W5_{A} (µm) | H5_{A} (µm) | W5_{C} (µm) | H5_{C} (µm) | ΔW5_{A} /Wav | ΔW5_{C} /Wav | W5_{BC} (µm) | H5 (µm) | ΔW5_{BC} /Wav | W5_{ABC} (µm) | H5 (µm) | ΔW5_{ABC} /Wav | W6_{ABC} (µm) | H6 (µm) | ΔW6_{ABC} /Wav |
| Ex.16 | Linear | | | | | | | | | | 5.4 | 0.2 | 34.0% | | | | | | |
| Ex.17 | Linear | | | | | | | | | | | | | 7.8 | 0.2 | 30.0% | | | |
| Ex.18 | Linear | | | | | | | | | | 5.4 | 0.2 | 34.0% | | | | 8.0 | - | - |
| Ex.19 | Linear | 2.0 | 0.2 | 0.0% | | | | | | | | | | | | | 7.8 | 0.2 | 30.0% |
| Ex.20 | Linear | | | | | | | | | | | | | | | | | | |
| Ex.21 | Linear | | | | | | | | | | | | | | | | | | |
| Ex.22 | Linear | 100.0 | 12.0 | 0.0% | | | | | | | | | | | | | | | |
| Ex.23 | Linear | | | | 100.0 | 12.0 | 100.0 | 12.0 | 0.0% | 0.0% | | | | | | | | | |
| Ex.24 | Linear | | | | | | | | | | 200.0 | 12.0 | 0.0% | | | | | | |
| Ex.25 | Linear | | | | | | | | | | | | | 300.0 | 12.0 | 0.0% | | | |
| Ex.26 | Linear | | | | | | | | | | 200.0 | 12.0 | 0.0% | | | | 330.0 | - | - |
| Ex.27 | Linear | | | | | | | | | | | | | 300.0 | 12.0 | 0.0% | 300.0 | 12.0 | 0.0% |
| Ex.28 | Linear | | | | | | | | | | | | | | | | | | |
| Ex.29 | Linear | | | | | | | | | | | | | | | | | | |
| Ex.30 | Linear | | | | | | | | | | | | | | | | | | |

**[Table 6]**

| | First to fifth regions | Pixel size (µm) | Evaluation | | | |
|---|---|---|---|---|---|---|
| | | | Image quality | Changes in glossiness | Anti-counterfeiting effect | Overall evaluation |
| Ex.16 | Linear | 8 | A | A | A | AA |
| Ex.17 | Linear | 8 | A | A | A | AA |
| Ex.18 | Linear | 8 | A | A | A | AA |
| Ex.19 | Linear | 8 | A | A | A | AA |
| Ex.20 | Linear | 164 | A | A | A | AA |
| Ex.21 | Linear | 330 | A | A | A | AA |
| Ex.22 | Linear | 330 | A | A | A | AA |
| Ex.23 | Linear | 330 | A | A | A | AA |
| Ex.24 | Linear | 330 | A | A | A | AA |
| Ex.25 | Linear | 330 | A | A | A | AA |
| Ex.26 | Linear | 330 | A | A | A | AA |
| Ex.27 | Linear | 330 | A | A | A | AA |
| Ex.28 | Linear | 20 | A | A | A | AA |
| Ex.29 | Linear | 54 | A | A | A | AA |
| Ex.30 | Linear | 16 | A | A | A | AA |

**[Table 7]**

| | First to fifth regions | First colored line | | | Second colored line | | | Third colored line | | | Fourth colored line | | |
|---|---|---|---|---|---|---|---|---|---|---|---|---|---|
| | | W1 (µm) | H1 (µm) | ΔW1 /Wav | W2 (µm) | H2 (µm) | ΔW2 /Wav | Width W3 (µm) | Height H3 (µm) | ΔW3 /Wav | Width W4 (µm) | Height H4 (µm) | ΔW4 /Wav |
| Ex.31 | Linear | 56.0 | 2.3 | 12.0% | 43.2 | 2.9 | -13.6% | 52.5 | 2.8 | 5.0% | 48.3 | 2.4 | -3.4% |
| Ex.32 | Linear | 116.3 | 11.7 | 16.3% | 85.0 | 10.3 | -15.0% | 95.0 | 10.4 | -5.0% | 103.8 | 12.0 | 3.8% |
| Ex.33 | Linear | 1.3 | 0.3 | -26.4% | 2.2 | 0.1 | 24.5% | 1.8 | 0.1 | 1.9% | - | - | - |
| Ex.34 | Linear | 30.6 | 1.8 | -1.3% | 42.1 | 1.5 | 35.8% | 20.3 | 2.8 | -34.5% | - | - | - |
| Ex.35 | Linear | 39.0 | 0.7 | 15.4% | 27.0 | 1.9 | -20.1% | 45.0 | 1.7 | 33.1% | 24.2 | 3.4 | -28.4% |
| Ex.36 | Linear | 1.2 | 0.1 | -18.6% | 1.5 | 0.1 | 1.7% | 1.4 | 0.1 | -5.1% | 1.8 | 0.1 | 22.0% |
| Comp.Ex.1 | Linear | 196.0 | 14.9 | 22.1% | 165.4 | 9.4 | 3.0% | 120.3 | 6.4 | -25.1% | - | - | - |
| Comp.Ex.2 | Linear | 118.5 | 14.0 | 2.6% | 134.2 | 13.3 | 16.1% | 104.5 | 15.8 | -9.6% | 105.0 | 12.5 | -9.1% |
| Comp.Ex.3 | Linear | 185.0 | 18.0 | -21.9% | 253.0 | 21.2 | 6.9% | 223.0 | 17.5 | -5.8% | 286.0 | 15.0 | 20.8% |
| Comp.Ex.4 | Arc | 64.1 | 3.1 | 27.4% | 38.3 | 1.6 | -23.9% | 28.2 | 1.8 | -44.0% | 70.7 | 4.3 | 40.5% |
| Comp.Ex.5 | Arc | 64.1 | 3.1 | 27.4% | 38.3 | 1.6 | -23.9% | 28.2 | 1.8 | -44.0% | 70.7 | 4.3 | 40.5% |
| Comp.Ex.6 | Arc | 24.5 | 1.9 | -63.0% | 35.2 | 2.2 | -46.9% | 54.6 | 3.4 | -17.6% | 150.8 | 7.3 | 127.5% |
| Comp.Ex.7 | Arc | 24.5 | 1.9 | -45.4% | 35.2 | 2.2 | -21.6% | 54.6 | 3.4 | 21.6% | 65.3 | 7.3 | 45.4% |

**[Table 8]**

| | First to fifth regions | Fifth colored line (PLSA) | | | Fifth colored line (PL5A+ PL5C) | | | | | | Fifth colored line (PLSB+ PL5C) | | | Fifth colored line (PL5A+PL5B+ PL5C) | | | Sixth colored line (PL6A+PL6B+ PL6C) | | |
|---|---|---|---|---|---|---|---|---|---|---|---|---|---|---|---|---|---|---|---|
| | | W5_{A} (µm) | H5_{A} (µm) | ΔW5_{A} /Wav | W5_{A} (µm) | H5_{A} (µm) | W5_{C} (µm) | H5_{C} (µm) | ΔW5_{A} /Wav | ΔW5_{C} /Wav | W5_{BC} (µm) | H5 (µm) | ΔW5_{BC} /Wav | W5_{ABC} (µm) | H5 (µm) | ΔW5_{ABC} /Wav | W6_{ABC} (µm) | H6 (µm) | ΔW6_{ABC} /Wav |
| Ex.31 | Linear | | | | | | | | | | | | | | | | | | |
| Ex.32 | Linear | | | | | | | | | | | | | | | | | | |
| Ex.33 | Linear | | | | | | | | | | | | | | | | | | |
| Ex.34 | Linear | | | | | | | | | | | | | | | | | | |
| Ex.35 | Linear | | | | | | | | | | | | | | | | | | |
| Ex.36 | Linear | | | | | | | | | | | | | | | | | | |
| Comp.Ex. 1 | Linear | | | | | | | | | | | | | | | | | | |
| Comp.Ex.2 | Linear | | | | | | | | | | | | | | | | | | |
| Comp.Ex.3 | Linear | | | | | | | | | | | | | | | | | | |
| Comp.Ex.4 | Arc | | | | | | | | | | | | | | | | | | |
| Comp.Ex.5 | Arc | 61.3 | 3.7 | 21.8% | | | | | | | | | | | | | | | |
| Comp.Ex.6 | Arc | | | | | | | | | | | | | | | | | | |
| Comp.Ex.7 | Arc | 81.4 | 10.4 | 81.3% | | | | | | | | | | | | | | | |

**[Table 9]**

| | First to fifth regions | Pixel size (µm) | Evaluation | | | |
|---|---|---|---|---|---|---|
| | | | Image quality | Changes in glossiness | Anti-counterfeiting effect | Overall evaluation |
| Ex.31 | Linear | 236 | A | A | A | AA |
| Ex.32 | Linear | 440 | A | A | A | AA |
| Ex.33 | Linear | 6 | A | B | A | A |
| Ex.34 | Linear | 106 | A | B | A | A |
| Ex.35 | Linear | 172 | A | B | A | A |
| Ex.36 | Linear | 14 | A | B | A | A |
| Comp. Ex. 1 | Linear | 628 | C | B | C | E |
| Comp.Ex.2 | Linear | 498 | C | A | C | D |
| Comp.Ex.3 | Linear | 960 | C | B | C | E |
| Comp.Ex.4 | Arc | 560 | C | C | A | C |
| Comp.Ex.5 | Arc | 640 | C | C | A | C |
| Comp.Ex.6 | Arc | 443 | C | C | A | C |
| Comp.Ex.7 | Arc | 443 | C | C | A | C |

As shown in Tables 1 to 9, the displays of Examples 1 to 36, in which the dimensions of the pixels PX in the X and Y directions were small, displayed high definition images, and each pixel was visually indistinguishable from other pixels. Further, the displays of Examples 1 to 36, in which the widths of the colored lines were small, were found to have a high anti-counterfeiting effect since the images displayed by these displays were not reproduced in the copied articles. Furthermore, the displays of Examples 1 to 36, in which the difference in width of the colored lines was small, produced changes in glossiness in response to changes in observation direction, and such changes could be used to visually determine authenticity.

Further, the root mean square roughness Rq of the colored lines was measured by the above-mentioned method. Table 10 below shows a part of the results.

**[Table 10]**

| | Root mean square roughness Rq (µm) | | | |
|---|---|---|---|---|
| | First colored line | Second colored line | Third colored line | Fourth colored line |
| Ex. 1 | 0.051 | 0.049 | 0.058 | |
| Ex.12 | 0.098 | 0.091 | 0.112 | |
| Ex. 13 | 0.013 | 0.010 | 0.017 | |
| Ex.20 | 0.239 | 0.191 | 0.213 | |
| Ex.28 | 0.026 | 0.024 | 0.030 | |
| Ex.32 | 0.420 | 0.321 | 0.362 | 0.389 |
| Comp.Ex.1 | 0.541 | 0.510 | 0.444 | |
| Comp.Ex.3 | 0.512 | 0.555 | 0.560 | 0.502 |

As shown in Table 10, in the displays according to Examples 1, 12, 13, 20, 28 and 32, all the colored lines had the root mean square roughness Rq of 0.420 or less.

### <Example 37>

A display 1G described above with reference to Fig. 21 was produced by the following method.

First, a relief structure was formed on a resist layer provided on a substrate using an electron beam lithography machine. In a portion of the resist layer corresponding to the first region R1, grooves corresponding to the grating lines were formed at a spatial frequency of 1150/mm. In a portion of the resist layer corresponding to the second region R2, grooves corresponding to the grating lines were formed at a spatial frequency of 1310/mm. In a portion of the resist layer corresponding to the third region R3, grooves corresponding to the grating lines were formed at a spatial frequency of 1550/mm. These grooves were formed with the length direction of the grooves parallel to the X direction, providing a square image region with dimensions of 30 mm in the X and Y directions and square pixels with dimensions of 30 µm in the X and Y directions. A metal layer was formed on the resist layer by sputtering, and electroforming was further performed to obtain an electroforming plate.

Next, a transfer foil 2 described above with reference to Fig. 22 was produced. First, a release layer was formed on a polyethylene terephthalate film to form a support 21. Next, a UV-curing resin was applied to the release layer at a thickness of approximately 3 µm. While the above electroforming plate was pressed against the UV-curing resin layer, the UV-curing resin layer was heated and irradiated with UV light. Thus, the UV-curing resin was cured to obtain a relief structure forming layer 22 having the above-mentioned relief structure on the surface. After the electroforming plate was removed, a vapor deposition layer made of aluminum was formed on the entire surface of the relief structure forming layer 22. Then, an adhesive was applied to the vapor deposition layer and the coating was dried to obtain an adhesive layer 23.

Then, a laminate of the relief structure forming layer 22, the vapor deposition layer and the adhesive layer 23 was transferred from the support 21 onto the substrate 10. Subsequently, a composite of the laminate and the substrate 10 was sandwiched between the light scattering layer 11 and the transparent layer 12 to obtain a blank medium. As the substrate 10, LEXAN (registered trademark) SD8B94 (100 µm thickness) manufactured by SABIC was used. As the light scattering layer 11, LEXAN (registered trademark) SD8B24 (200 µm thickness) manufactured by SABIC was used. As the transparent layer 12, LEXAN (registered trademark) SD8B14 (100 µm thickness) manufactured by SABIC was used. The blank medium was irradiated with infrared laser light from the transparent layer 12 side to remove the vapor deposition material in the irradiated region. Thus, a display 1G was obtained.

The display 1G was observed in the Z direction while illuminating the display 1G with white light in a direction perpendicular to the X direction at an angle of 45° relative to the Y direction. As a result, a multicolor gradation display image was visually observed.

### [Reference Signs List]

- 1: Display,
- 1A: Display,
- 1B: Display,
- 1C: Display,
- 1D: Display,
- 1E: Display,
- 1F: Display,
- 1G: Display,
- 1H: Display,
- 1J: Display,
- 1K: Display,
- 2: Transfer foil,
- 10: Substrate,
- 11: Light scattering layer,
- 12: Transparent layer,
- 21: Support,
- 22: Relief structure forming layer,
- 23: Adhesive layer,
- PL1: First colored line,
- PL2: Second colored line,
- PL3: Third colored line,
- PL4: Fourth colored line,
- PL5: Fifth colored line,
- PL5A: Fifth colored line,
- PL5B: Fifth colored line,
- PL5C: Fifth colored line,
- PL6A: Sixth colored line,
- PL6B: Sixth colored line,
- PL6C: Sixth colored line,
- PR: Print region,
- PX: Pixel,
- R1: First region,
- R2: Second region,
- R3: Third region,
- R4: Fourth region,
- R5: Fifth region.

## Claims

1. A display comprising:
a substrate; and
a plurality of pixels arranged on the substrate,
the plurality of pixels being arranged in first and second directions perpendicular to each other, each of the plurality of pixels having a dimension of 440 µm or less in each of the first and second directions,
each of the plurality of pixels including linear shaped first to third regions, the first to third regions respectively extending in the second direction and being arranged in the first direction,
the first region including a first colored line in at least some of the plurality of pixels, the first colored line extending in the second direction over an entire width of the first region,
the second region including a second colored line that exhibits a color different from a color of the first colored line in at least some of the plurality of pixels, the second colored line extending in the second direction over an entire width of the second region,
the third region including a third colored line that exhibits a color different from colors of the first and second colored lines in at least some of the plurality of pixels, the third colored line extending in the second direction over an entire width of the third region, wherein
each of the plurality of pixels differs from one or more other of the plurality of pixels in one or more of dimensions of the first to third colored lines in the second direction, whereby a gradation display image is displayed.

2. The display according to claim 1, wherein
an absolute value of a difference between an arithmetic mean W_{AV}1 of a width W1 of the first region, a width W2 of the second region and a width W3 of the third region and the width W1, an absolute value of a difference between the arithmetic mean W_{AV}1 and the width W2, and an absolute value of a difference between the arithmetic mean W_{AV}1 and the width W3 are such that ratios of each of the absolute values to the arithmetic mean W_{AV}1 are each in the range of 0% to 20%.

3. The display according to claim 1 or 2, wherein
each of the plurality of pixels further includes a linear shaped fourth region, the fourth region extending in the second direction and being arranged parallel to the first to third regions in the first direction, the fourth region including a fourth colored line that exhibits a color different from colors of the first to third colored lines in at least some of the plurality of pixels, the fourth colored line extending in the second direction over an entire width of the fourth region.

4. The display according to claim 3, wherein
an absolute value of a difference between an arithmetic mean Wav2 of a width W1 of the first region, a width W2 of the second region, a width W3 of the third region and a width W4 of the fourth region and the width W1, an absolute value of a difference between the arithmetic mean Wav2 and the width W2, an absolute value of a difference between the arithmetic mean Wav2 and the width W3, and an absolute value of a difference between the arithmetic mean W_{AV}2 and the width W4 are such that ratios of each of the absolute values to the arithmetic mean W_{AV}2 are each in the range of 0% to 20%.

5. A display comprising:
a substrate; and
a plurality of pixels arranged on the substrate,
the plurality of pixels being arranged in first and second directions perpendicular to each other, each of the plurality of pixels having a dimension of 440 µm or less in each of the first and second directions,
each of the plurality of pixels including linear shaped first to third regions, the first to third regions respectively extending in the second direction and being arranged in the first direction,
the first region including a first colored line in at least some of the plurality of pixels, the first colored line extending in the second direction over an entire width of the first region,
the second region including a second colored line that exhibits a color different from a color of the first colored line in at least some of the plurality of pixels, the second colored line extending in the second direction over an entire width of the second region,
the third region including a third colored line that exhibits a color different from colors of the first and second colored lines in at least some of the plurality of pixels, the third colored line extending in the second direction over an entire width of the third region,
the first region including a first portion in which the first colored line is not provided or the second region including a second portion in which the second colored line is not provided or the third region including a third portion in which the third colored line is not provided in at least some of the plurality of pixels, one or more of the first to third portions including a fifth colored line that exhibits a color different from colors of the first to third colored lines, the fifth colored line extending in the second direction, wherein
each of the plurality of pixels differs from one or more other of the plurality of pixels in one or more of dimensions of the first to third colored lines in the second direction, and differs from one or more other of the plurality of pixels in a total area of the fifth colored lines, whereby a gradation display image is displayed.

6. The display according to claim 5, wherein
the fifth colored line is provided over an entire length of each of the first to third portions.

7. The display according to claim 5, wherein
in at least some of the plurality of pixels, the fifth colored line is provided only in part of the first to third portions.

8. The display according to claim 5, wherein
in at least some of the plurality of pixels, the fifth colored line is provided only in part of the first to third portions, and
a sixth colored line that exhibits a color different from colors of the first to third colored lines and the fifth colored line is provided in a portion of the first to third portions in which the fifth colored line is not provided, the sixth colored line extending in the second direction.

9. The display according to claim 8, wherein
in each of the pixels including the sixth colored line, a sum of the dimension of the first colored line in the second direction and the dimension of the fifth colored line provided in the first portion in the second direction, a sum of the dimension of the second colored line in the second direction and the dimension of the fifth colored line provided in the second portion in the second direction, and a sum of the dimension of the third colored line in the second direction and the dimension of the fifth colored line provided in the third portion in the second direction are the same.

10. The display according to any one of claims 5 to 9, wherein
an absolute value of a difference between an arithmetic mean W_{AV}1 of a width W1 of the first region, a width W2 of the second region and a width W3 of the third region and the width W1, an absolute value of a difference between the arithmetic mean W_{AV}1 and the width W2, and an absolute value of a difference between the arithmetic mean W_{AV}1 and the width W3 are such that ratios of each of the absolute values to the arithmetic mean W_{AV}1 are each in the range of 0% to 20%, and
a difference between the arithmetic mean W_{AV}1 and a width W5A of the fifth colored line located in the first region of the fifth colored line, a difference between the arithmetic mean W_{AV}1 and a width W5B of the fifth colored line located in the second region of the fifth colored line, and a difference between the arithmetic mean W_{AV}1 and a width W5C of the fifth colored line located in the third region of the fifth colored line are such that ratios of each of the differences to the arithmetic mean W_{AV}1 are each in the range of -20% to 34%.

11. The display according to any one of claims 1 to 10, wherein
the first to third regions are arranged in the same order in the plurality of pixels adjacent in the first direction, and the first to third regions are arranged in the same order in the plurality of pixels adjacent in the second direction.

12. The display according to any one of claims 1 to 10, wherein
the first to third regions are arranged in the same order in the plurality of pixels adjacent in the first direction, and the first to third regions are arranged in different orders from each other in the plurality of pixels adjacent in the second direction.

13. The display according to any one of claims 1 to 12, wherein
each of the colored lines has a width in the range of 2.0 µm to 100.0 µm.

14. The display according to any one of claims 1 to 13, wherein
among contours of the colored lines in a cross section perpendicular to the second direction, a portion corresponding to a top of each of the colored lines has a convex curved shape.

15. The display according to any one of claims 1 to 14, wherein
each of the colored lines has a height in the range of 0.2 µm to 12.0 µm.

16. The display according to any one of claims 1 to 15, wherein
each of the colored lines has a root mean square roughness Rq of 0.420 µm or less.

17. The display according to any one of claims 1 to 16, wherein
the colored lines are printed lines.

18. The display according to any one of claims 1 to 17, wherein
the colored lines are formed by gravure offset printing.

19. The display according to any one of claims 1 to 13, wherein
the colored lines include a vapor deposition layer provided on at least part of a relief type diffraction grating.

20. The display according to claim 19, wherein
the plurality of pixels include a relief structure forming layer on which the relief type diffraction grating is formed, the relief structure forming layer being provided on one surface, and the vapor deposition layer that partially covers the relief type diffraction grating.
